(19) **Europäisches Patentamt / European Patent Office / Office européen des brevets**

(11) **EP 2 662 701 B1**

(12) **FASCICULE DE BREVET EUROPEEN**

(45) Date de publication et mention de la délivrance du brevet:
**25.05.2016 Bulletin 2016/21**

(51) Int Cl.:
***G01S 7/02*** *(2006.01)* ***G01R 23/15*** *(2006.01)*

(21) Numéro de dépôt: **13163393.5**

(22) Date de dépôt: **11.04.2013**

(54) **Procédé de sequencement d'un récepteur**

Sequenzierungsverfahren eines Empfängers

Receiver sequencing method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2012 FR 1201372**

(43) Date de publication de la demande:
**13.11.2013 Bulletin 2013/46**

(73) Titulaire: **Thales**
**92200 Neuilly Sur Seine (FR)**

(72) Inventeurs:
• **Lemoine, Jean-Marie**
**78960 Voisins le Bretonneux (FR)**
• **Delabbaye, Jean-Yves**
**78125 Vieille Eglise en Yvelines (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**US-A1- 2005 052 311 US-A1- 2010 027 715**
**US-B2- 6 788 243**

• **WINSOR C ET AL: "Optimisation and evaluation of receiver search strategies for electronic support", IET RADAR SONAR NAVIGATION, THE INSTITUTION OF ENGINEERING AND TECHNOLOGY, UK, vol. 6, no. 4, 1 avril 2012 (2012-04-01), pages 233-240, XP011441306, ISSN: 1751-8784, DOI: 10.1049/IET-RSN.2010.0377**
• **VAUGHAN L CLARKSON I: "Optimisation of Periodic Search Strategies for Electronic Support", IEEE TRANSACTIONS ON AEROSPACE AND ELECTRONIC SYSTEMS, IEEE SERVICE CENTER, PISCATAWAY, NJ, US, vol. 47, no. 3, 1 juillet 2011 (2011-07-01), pages 1770-1784, XP011369256, ISSN: 0018-9251, DOI: 10.1109/TAES.2011.5937264**
• **CLARKSON I V L ET AL: "Performance limits of sensor-scheduling strategies in electronic support", IEEE TRANSACTIONS ON AEROSPACE AND ELECTRONIC SYSTEMS, IEEE SERVICE CENTER, PISCATAWAY, NJ, US, vol. 43, no. 2, 1 avril 2007 (2007-04-01), pages 645-650, XP011189401, ISSN: 0018-9251, DOI: 10.1109/TAES.2007.4285359**
• **CLARKSON I V L ET AL: "Sensor scheduling in electronic support using Markov chains", IEE PROCEEDINGS: RADAR, SONAR & NAVIGATION, INSTITUTION OF ELECTRICAL ENGINEERS, GB, vol. 153, no. 4, 17 août 2006 (2006-08-17), pages 325-332, XP006026750, ISSN: 1350-2395**

EP 2 662 701 B1

**Description**

Le domaine de l'invention est celui du séquencement de récepteurs.

Le domaine de l'invention est notamment celui de l'acquisition d'information sur des signaux électromagnétiques tels que des signaux radar et/ou des signaux de communication. Ces signaux peuvent, par exemple, être acquis au moyen de récepteur du type ELINT signifiant « Electronic Intelligence » en terminologie anglo-saxonne qui permettent d'acquérir et analyser des signaux radars reçus selon une direction prédéterminée ou au moyen de récepteurs SIGINT signifiant « Signal Intelligence » en terminologie anglo-saxonne (dédiés à la fois à l'écoute des signaux radar et des signaux de communication) lorsque le récepteur ne peut pas couvrir en permanence l'intégralité du spectre fréquentiel à surveiller.

L'acquisition d'informations sur un signal nécessite deux étapes, une étape de détection ou d'acquisition du signal pendant une durée, classiquement comprise entre 50 et 100 ms, suffisante pour permettre la mise en oeuvre d'une seconde étape d'analyse du signal acquis. L'invention se rapporte à l'étape d'acquisition des signaux et plus particulièrement à un procédé de séquencement d'un récepteur (aussi appelé « scanning strategy » ou « sensor-scheduling » en terminologie anglo-saxonne). Le séquencement d'un récepteur est la détermination d'une séquence de consignes d'écoute définissant chacune une bande de fréquence d'écoute associée à une durée d'écoute élémentaire pendant laquelle le récepteur doit écouter ladite bande de fréquence d'écoute.

Une des difficultés liées à l'étape de réception en guerre électronique vient du fait qu'on ne connait pas exactement les caractéristiques des signaux que l'on écoute et que chaque radar émet sur une bande de fréquences relativement étroite mais l'ensemble de toutes les fréquences porteuses de ces radars occupe une bande de largeur considérable : de l'ordre de plusieurs GHz. Par ailleurs, pour que le récepteur présente une bonne capacité à détecter et analyser les signaux, on utilise un récepteur à bande étroite apte à acquérir (ou détecter) des signaux compris dans une bande de fréquences de largeur similaire à la largeur d'émission des radars y compris leur éventuelle agilité, c'est-à-dire inférieure ou égale à 1 GHz. Il n'est pas envisageable, du point de vue économique, d'utiliser le nombre de récepteurs nécessaires pour couvrir toute la bande de fréquences de largeur supérieure à 1 GHz.

Se pose alors le problème suivant : comment déterminer, en fonction du temps, les bandes de fréquences d'écoute successives d'un récepteur pendant une mission de façon à intercepter au mieux des signaux issus de radars qui émettent pendant la mission lorsqu'on ne dispose pas des ressources en matériel et en traitement suffisantes pour suivre simultanément les émissions sur toute la bande de fréquences sur laquelle les radars sont susceptibles d'émettre. Nous rappelons que l'objectif à atteindre est de détecter et analyser le maximum de signaux présents dans le domaine de recherche.

Des solutions ont déjà été développées pour répondre à cette question.

Dans le cas des récepteurs ELINT dédiés à l'écoute des signaux radar, le séquencement fonctionne souvent selon l'un des deux modes suivants : 1) soit un déroulement de trame d'écoute qui est régulière et qui reste très peu de temps sur chaque bande de fréquence mais qui y reste davantage lorsqu'un signal est rencontré, 2) soit un déroulement de trame d'écoute qui est régulière mais reste très longtemps sur chaque bande pour être sûr de percevoir les signaux radars vus uniquement sur passage de lobe. L'objectif de ce type de balayage est d'intercepter, sur le long terme, les signaux émis par tous les radars présents dans l'environnement du récepteur. Ce type de séquencement présente l'inconvénient, pour assurer l'interception de tous ces signaux, de nécessiter des missions de longue durée qui sont extrêmement coûteuses.

Le document Winsor et Al « Optimisation and evaluation of receiver search strategies for electronic support » IET Radar sonar navigation, the institution of engineering and technology, UK, vol 6, nO4, 1er avril 2012, page 233-240, ainsi que les documents US 2010/027715, US 2005/052311 et US 6 788 243 décrivent des procédés de séquencement de récepteurs dans lesquels sont générées des consignes d'écoute successives.

Le but de la présente invention comprend au moins un but parmi ceux qui sont listés ci-dessous.

Un but est de proposer un procédé de séquencement d'un récepteur qui permette d'optimiser l'interception d'un ensemble de signaux électromagnétiques émis par un ensemble de sources se trouvant dans l'environnement du récepteur, et émettant des signaux dans différentes bandes de fréquence, de façon à pouvoir limiter la durée des missions. Autrement dit, on cherche à intercepter un maximum de signaux.

Par ailleurs, les procédés de séquencement actuellement mis en oeuvre pour intercepter des émissions radar sont envisagés pour des radars à balayage circulaire.

Une des problématiques des émissions non permanentes est la synchronisation des écoutes et des passages des lobes devant le récepteur (autrement dit, il est nécessaire, pour que l'interception soit réussie, que le récepteur écoute la bande de fréquence dans laquelle émet le radar au moment où le radar émet un signal en direction du récepteur). Un récepteur peut être rendu aveugle vis-à-vis d'un radar si les instants d'écoute du récepteur sont toujours décalés avec les instants de passage du lobe du radar correspondant devant le récepteur. Dans la suite du texte, on appelle ce problème un problème d'effet stroboscopique entre les écoutes et les émissions.

Une solution pour résoudre ce problème est donnée par [1] qui propose d'utiliser la théorie des chaînes de Markov : cette solution consiste à écouter des bandes de fréquences sur lesquelles émettent des radars au moyen d'une chaîne de Markov à nombre d'états fini qui sont des bandes de fréquences qui doivent être interceptées. Toutefois, ce procédé de séquencement présente l'inconvénient d'être complexe puisqu'il faut prescrire une distribution de probabilité initiale et une matrice de probabilités de transition d'une fréquence à une autre.

Un autre but de l'invention est de proposer un procédé simplifié de séquencement d'un récepteur permettant de s'affranchir des problèmes de stroboscopie.

Par ailleurs, le procédé de séquencement ci-dessus est optimisé comme beaucoup de procédés de séquencement actuels, uniquement pour l'écoute de signaux émis uniquement par un type de balayage, notamment les balayages circulaires. Ils nécessitent des connaissances fortes sur les signaux à intercepter (période de rotation du radar, fréquence émise).

Or, différents types d'émissions peuvent être présents dans l'environnement du récepteur. On peut trouver des émissions vues de façon permanente par le récepteur (émissions qui ne nécessitent qu'un rendez-vous en fréquence avec le récepteur pour être interceptées par ce dernier : le signal arrive à être intercepté par le récepteur dés que le récepteur écoute une bande de fréquence comprenant la fréquence du signal). Dans la suite du texte, on considère que les émissions suivantes sont des émissions permanentes : les émissions de communication et les radars qui sont suffisamment proches du récepteur pour être perçus de manière permanente par le récepteur. On peut également trouver des émissions non permanentes perçues par le récepteur uniquement lors du passage d'un lobe selon une direction d'écoute du récepteur. Ces émissions peuvent être issues de sources fonctionnant selon différents types de balayage : circulaire, sectoriel ou électronique.

Un besoin qui se fait ressentir actuellement est d'optimiser l'interception des signaux provenant d'un ensemble de sources émettant selon différents types de balayage (émissions permanentes, balayages circulaire, sectoriel et électronique.)

Un autre but est de proposer un procédé de séquencement d'un récepteur qui puisse permettre d'optimiser l'interception d'un ensemble de signaux tel que défini précédemment.

Un autre but est de proposer un procédé de ce type qui soit simple à mettre en oeuvre.

Un autre but est de proposer un procédé de ce type sans avoir de connaissances précises sur les signaux que l'on cherche à intercepter.

A cet effet, l'invention a pour objet un procédé de séquencement d'un récepteur apte à recevoir des signaux électromagnétiques émis dans une bande de fréquence de réception sur une période d'écoute de signaux T, comprenant une étape de génération de consignes d'écoute successives devant être exécutées successivement par le récepteur, lesdites consignes d'écoute étant obtenues par tirage aléatoire sans mémoire parmi un ensemble de consignes d"écoute définissant chacune une durée élémentaire d'écoute $\varepsilon j$, et une bande de fréquence d'écoute j, prise parmi un ensemble J' de bandes fréquences d'écoute, sur laquelle le récepteur doit régler sa bande de fréquence de réception pendant la durée élémentaire d'écoute $\varepsilon j$, le tirage aléatoire étant réalisé de façon à respecter une loi de probabilité d'écoute définissant des probabilités d'écoute de l'ensemble des bandes de fréquence d'écoute. Plus précisément, le tirage aléatoire est réalisé de façon à respecter une loi de probabilité d'écoute définissant des probabilités d'écoute des bandes de fréquence d'écoute respectives de l'ensemble des bandes de fréquence d'écoute.

Avantageusement, la loi de probabilité d'écoute xj minimise une grandeur prédéterminée représentative de la proportion de signaux non-interceptés, pendant la période d'écoute et par le récepteur, parmi un ensemble de signaux supposés devoir être interceptés par le récepteur et être issus d'un ensemble de sources fonctionnant selon un ensemble de types de balayage B comprenant au moins un type de balayage b pris parmi un balayage circulaire, un balayage électronique, un balayage sectoriel et une émission permanente, et émettant des signaux présentant des fréquences comprises dans l'ensemble J de bandes de fréquence d'écoute j.

Avantageusement, ladite valeur de la dite grandeur est déterminée à partir d'une modélisation dudit ensemble de signaux par une famille de densités de probabilité $p_{j,\,b}(\tau)$ exprimées en fonction d'un paramètre de périodicité $\tau$, pour une bande de fréquence d'écoute j et un type de balayage donné b et à partir d'une famille de probabilités de présence $\pi_{j,\,b}$ dans l'ensemble de signaux considéré, de signaux émis avec une fréquence comprise dans une bande de fréquence d'écoute j et issus d'un type de balayage prédéterminé b, ladite au moins une famille étant définie pour l'ensemble J de bandes de fréquences d'écoute j et pour l'ensemble B de types de balayage, ledit paramètre de périodicité $\tau$ étant représentatif de la durée moyenne, sur la période d'écoute T, entre deux éclairements successifs du récepteur par un signal issu d'une même source dans le cas des balayages électronique, sectoriel et circulaire et étant la durée élémentaire d'écoute $\varepsilon_j$ dans le cas des émissions permanentes.

Avantageusement, l'ensemble de types de balayage comprend plusieurs types de balayages.

Selon un mode de réalisation la grandeur est la probabilité moyenne de non-interception d'un signal, ou des signaux, sur une durée D. L'étape de détermination de la loi de probabilité comprend une étape d'optimisation consistant à minimiser la probabilité moyenne de non interception.

Avantageusement, la durée $D(\tau)$ est proportionnelle au paramètre de périodicité $\tau$.

Avantageusement, l'étape d'optimisation est réalisée avec les contraintes suivantes :

$$\alpha > \frac{1}{J'-1}\left(J' \underset{j}{Max}\left(\ln \pi_j\right) - \sum_{k=1}^{J'} \ln \pi_k\right) \text{ et } \alpha > \sum_{k=1}^{J'} \ln \pi_k - J' \underset{j}{Max}\left(\ln \pi_j\right)$$

$J'$ $J'$ où $\pi_j$ et $\pi_k$ appartiennent à l'intervalle ]0 ; 1], où $\sum_{j=1}^{J'} \pi_j = 1$ et $\sum_{k=1}^{J'} \pi_k = 1$ et où $\alpha$ est le rapport entre la durée D($\tau$) et le paramètre de périodicité.

Avantageusement, la probabilité moyenne de non-interception est : $\sum_{j=1}^{J'} \pi_j\, G_j\left(x_j\right)$ où

$$G_j\left(x_j\right) = \int_0^\infty e^{-x_j D(\tau)/\tau}\, p_j\ (\tau)d\tau$$ et où $p_j(\tau)$ est une densité de probabilité de présence, où $\pi_j$ appartient à

l'intervalle ]0 ; 1] et où $\sum_{j=1}^{J'} \pi_j = 1$.

Avantageusement, la probabilité moyenne de non-interception est :

$$\sum_{j=1}^{J'} \pi_j\, G_j\left(x_j\right) \text{ où } G_j\left(x_j\right) = \int_0^\infty (1-x_j)^{2[D(\tau)/2\tau]}\left(1 - \frac{D(\tau)}{2\tau}x_j + \left[\frac{D(\tau)}{2\tau}\right]x_j\right)p_j\ (\tau)d\tau,$$

où $p_j(\tau)$ où $p_j\ (\tau)$ est une densité de probabilité de présence, où $\pi_j$ appartient à l'intervalle ]0 ; 1] et où $\sum_{j=1}^{J'} \pi_j = 1$.

Avantageusement, la probabilité moyenne de non- interception est : $\sum_{j=1}^{J'} \pi_j\, G_j\left(x_j\right)$ où

$$G_j\left(x_j\right) = \int_0^\infty (1-x_j)^{[D(\tau)/\tau]} p_j\ (\tau)d\tau,$$ où $p_j(\tau)$ est une densité de probabilité, où $\pi_j$ appartient à l'intervalle ]0 ;

1] et où $\sum_{j=1}^{J'} \pi_j = 1$.

Avantageusement, la probabilité moyenne de non- interception est : $\sum_{j=1}^{J'} \pi_j\ (1-x_j)^{[D(\tau)/\tau]}$ où $\pi_j$ appartient à l'intervalle ]0 ; 1] et où $\sum_{j=1}^{J'} \pi_j = 1$.

Avantageusement, la probabilité moyenne de non-interception est :

$$H\ (x_j) = H1\ (x_j) + H2\ (x_j) \text{ ou } H1\ (x_j)\ \text{ou } H2\ (x_j)$$

où $H1(x_j) = \sum\limits_{b1} \sum\limits_{j=1}^{J'} \left( \pi_{j,b1} \left(1 - x_j\right)^{\alpha_{b1}} \right)$ et où $H2(x_j) = \pi_{j,elec} e^{-\alpha_{elec} x_j}$ , où $\pi_{j,b1}$ et $\pi_{j,elec}$ appartiennent à l'intervalle ]0 ; 1] et où $\sum\limits_{j=1}^{J'} \pi_{j,elec} + \sum\limits_{j=1}^{J'} \sum\limits_{b1} \pi_{j,b1} = 1$.

Avantageusement, la loi de probabilité est : $x_j = \dfrac{1}{J'} + \dfrac{1}{\alpha}\left( \ln \pi_j - \dfrac{1}{J'} \sum\limits_{k=1}^{J'} \ln \pi_k \right)$ pour j= 1 à J', où $\alpha$ est

positif, et où $\pi_j$ et $\pi_k$ appartiennent à l'intervalle ]0 ; 1] et où $\sum\limits_{j=1}^{J'} \pi_j = 1$.

Avantageusement, la loi de probabilité d'écoute est : $x_j = 1 - \left( \dfrac{1}{\pi_j} \right)^{\frac{1}{\alpha - 1}} \dfrac{J' - 1}{\sum\limits_{k=1}^{J'} \left( \pi_k^{\frac{1}{1-\alpha}} \right)}$ pour

j= 1 à J' où $\alpha$ est un entier supérieur à 2 et où $\pi_j$ et $\pi_k$ appartiennent à l'intervalle ]0 ; 1] et où

$\sum\limits_{j=1}^{J'} \pi_j = 1$ et $\sum\limits_{k=1}^{J'} \pi_k = 1$.

Selon un autre mode de réalisation, la grandeur est la durée moyenne entre deux interceptions consécutives, par le récepteur, d'un signal. La moyenne est réalisée sur l'ensemble de fréquence, sur l'ensemble de types de balayages et sur un domaine de paramètre de périodicité. Avantageusement, la durée moyenne entre deux interceptions est :

$K = \sum\limits_{j=1}^{J'} \dfrac{\tau_j}{x_j}$ où $\tau_j$ est la moyenne du paramètre de périodicité, réalisée sur l'ensemble de types de balayages.

Avantageusement, la loi de probabilité d'écoute est : $x_j = \dfrac{\sqrt{\tau_j}}{\sum\limits_{k=1}^{J'} \sqrt{\tau_k}}$ ; $j = 1,2,...,J'$ où $\tau_j$ et $\tau_k$ correspondent aux moyennes du paramètre de périodicité, réalisées sur l'ensemble de types de balayages pour la partie d'indice j et respectivement d'indice k.

Dans un mode particulier de réalisation, le procédé comprend une étape de prétraitement comprenant une étape de détermination de densités de probabilité $p_{j,b}(\tau)$ et/ou de probabilités de présence $\pi_{j,b}$, à partir de domaines d'intérêt définis pour les types de balayages b de l'ensemble B et s'étendant, dans un domaine fréquence-paramètre de périodicité selon un axe de fréquences f et selon un axe de paramètre de périodicité $\tau$ pour les balayages circulaires, sectoriel et permanents, et pour les émissions permanentes, selon l'axe des fréquences, chaque domaine d'intérêt étant associé à un degré de priorité.

Avantageusement, l'étape de prétraitement comprend une étape consistant à découper l'axe des fréquences en un deuxième ensemble de bandes de fréquences d'indice m avec m = 1 à M où M est au moins égal à J' et, l'axe des paramètres de périodicité en bandes de paramètres de périodicité, de façon à délimiter des cases occupant chacune une deuxième bande de fréquence d'indice M une bande de paramètre de périodicité et,

- pour chaque type de balayage de l'ensemble B appartenant à l'ensemble formé par les balayages électronique, circulaire et sectoriel, une première étape de cumul dans laquelle on associe à chaque case du domaine fréquence-paramètre de périodicité associé audit type de balayage, un premier produit correspondant au produit de la proportion de la dite case qui est couverte par un domaine d'intérêt défini pour ledit type de balayage et du degré d'intérêt qui est associé audit domaine d'intérêt,
- lorsque l'ensemble B comprend des émissions permanentes, une deuxième étape de cumul dans laquelle on associe à chaque deuxième bande de fréquence, un deuxième produit correspondant au produit de la proportion de ladite deuxième bande de fréquence qui est couverte par un domaine d'intérêt défini pour les émissions permanentes et du degré d'intérêt qui est associé audit domaine,

- une étape de calcul d'une somme globale correspondant à la somme, de la somme des premiers produits réalisée sur tous les types de balayage de l'ensemble B appartenant à l'ensemble formé par les balayages circulaire, sectoriel et électronique, et des deuxièmes produits,
- une étape de normalisation consistant à calculer le rapport entre les premiers produits respectifs et la somme globale et entre les deuxièmes produits respectifs et la somme globale.

Avantageusement, le procédé comprend, pour au moins un type de balayage de l'ensemble B pris parmi les balayages circulaire, sectoriel et électronique, une étape de calcul, de probabilités de présence dans l'environnement du récepteur, de signaux émis avec une fréquence comprise dans chaque deuxième bande de fréquence et étant issus du balayage considéré en sommant les rapports, entre les premiers produits et la somme globale, obtenus pour ladite deuxième bande de fréquence et pour le balayage considéré.

Avantageusement, les positions et largeurs des deuxièmes bandes de fréquence sont choisies, connaissant une valeur maximale de la largeur de la bande de fréquence de réception du récepteur, de manière à minimiser le nombre de deuxièmes bandes de fréquence présentant une largeur égale ou inférieure à la valeur maximale de la largeur de la bande de fréquence de réception et qui sont au moins partiellement couvertes par un domaine d'intérêt défini pour l'un quelconque des balayages de l'ensemble B.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement une situation d'écoute, par un système d'écoute selon l'invention, de son environnement électromagnétique,
- la figure 2 représente schématiquement, en fonction du temps, une séquence de consignes d'écoute exécutées par un récepteur ainsi que les bandes de fréquence d'écoute associées sur une période T,
- la figure 3 représente schématiquement les étapes successives mises en oeuvre dans un exemple de réalisation du procédé selon l'invention,
- les figures 4a et 4b représentent les instants d'éclairement d'un récepteur par des signaux issus d'une source effectuant un balayage circulaire dans le sens de la flèche représentée sur la figure 4a,
- la figure 5a représente un radar effectuant un balayage sectoriel et la figure 5b représente, sur un axe temporel, des instants successifs d'un récepteur par un signal émis par le radar à balayage sectoriel,
- la figure 6 représente un ensemble de courbes f(x), en fonction de x, les courbes étant définies pour différentes valeurs de $\alpha$,
- la figure 7 représente un exemple d'étapes pouvant être mises en oeuvre pour réaliser l'étape de tirage aléatoire,
- la figure 8 représente un ensemble de domaines d'intérêt sur un plan fréquence-paramètre de périodicité,
- les figures 9a à 9d représentent schématiquement un exemple de découpage du plan fréquence-paramètre de périodicité et des domaines de périodicité définis pour les balayages circulaire, sectoriel et respectivement électronique ainsi que des domaines d'intérêt et un exemple découpage de l'axe des fréquences pour les émissions permanentes,
- la figure 10 représente schématiquement un autre exemple de découpage du plan fréquence- paramètre de périodicité.

D'une figure à l'autre, les mêmes éléments sont repérés par les mêmes références.

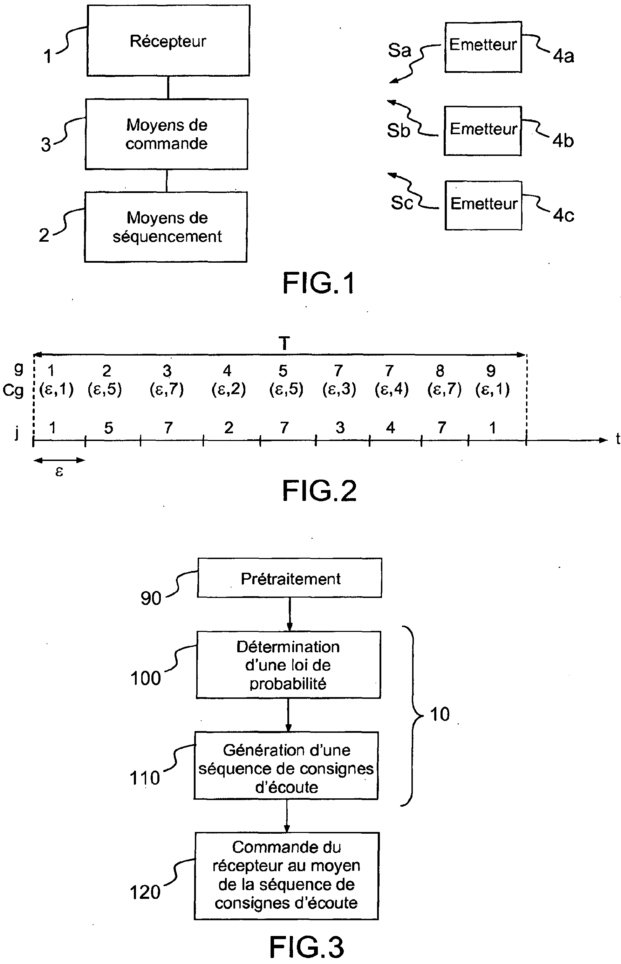

Sur la figure 1, on a représenté une situation de réception, ou d'écoute, par un système de réception ou d'écoute selon l'invention. Le système d'écoute comprend un récepteur 1, d'un ensemble de signaux électromagnétiques Sa, Sb, Sc émis par différentes sources 4a, 4b, 4c situées dans l'environnement du récepteur. Ce récepteur est apte à recevoir des signaux radar et/ou de communication.

Le récepteur 1 est apte à recevoir des signaux électromagnétiques compris dans une bande de fréquence de réception présentant une largeur pouvant être fixe ou variable et étant comprise dans un domaine de fréquence de réception plus large.

La largeur de la bande de fréquence de réception est typiquement inférieure ou égale à 1GHz. Le domaine de fréquences de réception s'étend typiquement sur plusieurs GHz.

Le récepteur 1 peut balayer le domaine de fréquence de réception en déplaçant sa bande de fréquence de réception dans le domaine de fréquences d'écoute, c'est-à-dire en déplaçant la fréquence centrale de sa bande de fréquence de réception sur le domaine de fréquence de réception.

Le système de réception comprend en outre des moyens de séquencement 2 aptes à déterminer des consignes d'écoute successives supposées devoir être, c'est-à-dire, devant être exécutées consécutivement par le récepteur 1.

Chaque consigne d'écoute définit une durée d'écoute élémentaire et une bande de fréquence d'écoute associée sur laquelle le récepteur est supposé devoir, c'est-à-dire est destiné à régler sa bande de fréquence de réception pendant la durée d'écoute élémentaire. Autrement dit, le récepteur est supposé devoir, c'est-à-dire est destiné à faire coïncider sa bande de fréquence de réception avec la bande de fréquence d'écoute qu'il exécute. Cela suppose que la largeur des bandes de fréquence d'écoute définies par les consignes ne soit pas supérieure à la largeur de la bande de fréquence maximale de réception du récepteur. Chaque bande de fréquence d'écoute est définie par une largeur de bande et une fréquence centrale d'écoute. Elle est délimitée par une fréquence minimale et une fréquence maximale comprises dans la bande de fréquence de réception. La largeur de la bande de fréquence d'écoute est la différence entre la fréquence maximale et la fréquence minimale.

Le système de réception comprend en outre des moyens de commande du récepteur 3 aptes à transmettre successivement les consignes d'écoute successives au récepteur de façon qu'il exécute successivement les consignes d'écoute. Autrement dit, le récepteur règle successivement sa bande de fréquence de réception sur les bandes de fréquence d'écoute successives pendant les durées d'écoute associées. Les consignes d'écoute peuvent être des consignes d'écoute consécutives devant être réalisées consécutivement par le récepteur. Dans ce cas, dès que le récepteur a fini d'exécuter une consigne d'écoute, il exécute la consigne d'écoute suivante.

Dans la suite du texte, on associe un indice j à chaque bande de fréquence appartenant à un ensemble J de J' fréquences d'écoute. j est un entier pouvant prendre les valeurs entières comprises allant de 1 à J' correspondant au nombre de bandes de fréquence effectivement écoutées par le récepteur. Les bandes de fréquence d'écoute sont avantageusement disjointes. Elles peuvent également se recouvrir partiellement (ce qui signifie que la fréquence maximale d'une bande d'indice j peut être inférieure à la fréquence minimale d'une bande d'indice j+1). Elles ne présentent pas forcément toutes la même largeur. La fréquence maximale d'une bande de fréquence d'écoute et la fréquence minimale de la bande de fréquence d'écoute d'indice supérieur peuvent être espacées sur l'axe des fréquences ou bien égales.

Sur la figure 2, nous avons représenté les indices de bandes de fréquence d'écoute j sur lesquelles le récepteur règle consécutivement sa bande de fréquence de réception en fonction du temps t pendant une période d'écoute T. Ces bandes de fréquence d'écoute présentent toutes la même largeur. Sur cet exemple, la durée d'écoute élémentaire $\varepsilon$ est fixe, elle est la même pour toutes les bandes de fréquences d'écoute j. L'intervalle de temps entre les écoutes de deux bandes de fréquence d'écoute successives est nul ou négligeable par rapport à la durée d'écoute. Les consignes d'écoute associées Cg avec g= 1, ...,G' où G' = 9 indiquées sous la valeur de l'indice g. Elles comprennent chacune une durée d'écoute élémentaire présentant la même valeur $\varepsilon$ et l'indice j d'une bande de fréquence d'écoute.

L'invention a également pour objet un procédé de séquencement du récepteur pour déterminer des consignes d'écoute consécutives sur une période d'écoute prédéterminée T.

Sur la figure 3, on a représenté schématiquement les étapes successives mises en oeuvre dans un exemple de réalisation d'un procédé de commande d'un récepteur selon l'invention qui comprend les étapes du procédé de séquencement 10 selon l'invention.

Ce procédé comprend une étape 110 de génération de séquences de consignes d'écoute Cg, g= 1,..., G, c'est-à-dire de consignes d'écoute consécutives d'indice g. g est le numéro d'ordre temporel de la consigne.

Chaque consigne d'écoute définit une bande de fréquence d'écoute j et une durée élémentaire d'écoute $\varepsilon_j$ associée. Lors de cette étape 110, les consignes d'écoute consécutives Cg sont obtenues par tirage aléatoire sans mémoire parmi un ensemble de consignes d'écoute ($\varepsilon_j$, j) avec j=1 à J' de façon à respecter une loi de probabilité d'écoute. Autrement dit, le saut d'une consigne d'écoute à la consigne d'écoute suivante est déterminé par tirage aléatoire sans relation d'un tirage à l'autre.

La loi de probabilité d'écoute définit, pour chaque bande de fréquence d'écoute d'indice j de l'ensemble des bandes de fréquence d'écoute j avec j= 1 à J', une probabilité d'écoute $X_j$ correspondant à la probabilité d'écouter ladite bande de fréquence d'écoute j pendant la période d'écoute T. La probabilité d'écoute est non nulle pour toutes les bandes de fréquences d'écoute de l'ensemble de fréquences d'écoute.

Le procédé selon l'invention présente plusieurs avantages. Il permet de limiter la durée des missions en déterminant une séquence de bandes de fréquence d'écoute respectant une loi de probabilité d'écoute d'une pluralité de bandes de fréquences. L'utilisation du tirage aléatoire permet également de s'affranchir des problèmes de stroboscopie décrits précédemment. Cette méthode présente l'avantage d'être beaucoup plus simple que la méthode basée sur les chaînes de Markov. Elle n'entraîne par ailleurs, comme nous le verrons dans la suite de la description, aucune complication si l'on souhaite optimiser l'interception de signaux issus de sources fonctionnant selon différents types de balayage.

Dans le cas où la durée élémentaire d'écoute $\varepsilon_j$ est unique, c'est-à-dire la même quel que soit l'indice j de la bande de fréquence d'écoute, la probabilité d'écoute d'une bande de fréquence d'écoute correspond à la probabilité de revisite de la bande de fréquence d'écoute considérée par le récepteur.

Dans ce cas, le fait de tirer une consigne d'écoute Cg parmi un ensemble de consignes d'écoute ($\varepsilon_j$, j) avec j=1 à J' correspondant à des couples de bandes de fréquence d'écoute et de durée d'écoute revient à tirer de façon aléatoire une bande de fréquence d'écoute parmi l'ensemble de bandes de fréquences d'écoute (j=1 à J').

En variante, la durée élémentaire d'écoute $\varepsilon_j$ dépend de l'indice j.

Avantageusement, la loi de probabilité d'écoute de l'ensemble de bandes de fréquences d'écoute j avec j= 1 à J' minimise une grandeur prédéterminée représentative de la proportion de signaux non-interceptés pendant la période d'écoute T par le récepteur 1 parmi un ensemble de signaux qui sont supposés être émis dans l'environnement du récepteur. Autrement dit, cette loi optimise un critère prédéterminé représentatif de la qualité de l'interception, L'ensemble de signaux est supposé être issu d'un ensemble de sources fonctionnant selon un ensemble de types de balayage comprenant au moins un type de balayage pris parmi un balayage circulaire, un balayage électronique, un balayage sectoriel, une émission permanente, et émettant des signaux présentant des fréquences comprises dans l'ensemble de bande de fréquences d'écoute. Autrement dit, une hypothèse de base défini un ensemble de signaux devant être interceptés par le récepteur. Cet ensemble de signaux est selon une hypothèse de base, issu d'un ensemble de types de balayages prédéfini.

Par fréquence d'un signal, on entend sa fréquence centrale ou sa porteuse. Des émissions radar agiles en fréquence émettent des impulsions qui n'ont pas toutes la même fréquence mais qui se répartissent dans une bande d'agilité autour d'une fréquence centrale.

On obtient ainsi un procédé qui optimise l'interception d'un ensemble de signaux issus d'émetteurs utilisant différents types de balayage et pas seulement des balayages circulaires. Plus précisément, le séquencement obtenu optimise l'interception d'un ensemble de signaux issus d'un ensemble de sources fonctionnant selon une pluralité de types de balayages et qui émettent des signaux dans différentes bandes de fréquence.

Pour déterminer 100 la loi de probabilité d'écoute de l'ensemble des bandes de fréquences d'écoute j avec j= 1 à J', on optimise donc un critère représentatif de la qualité de l'interception d'un ensemble de signaux à partir de données d'entrée.

On note que le récepteur intercepte un signal à balayage circulaire, sectoriel ou électronique lorsqu'il écoute une bande de fréquence d'écoute j comprenant une fréquence utilisée par le signal et que le signal est émis en direction du récepteur. Il y a alors rendez-vous en temps et en fréquence.

Ces données d'entrée comprennent une modélisation de l'ensemble de signaux par une densité de probabilité de présence selon trois variables p (f, b, $\tau$). Les trois variables comprennent la fréquence f des signaux, le type de balayage b dont sont issus les signaux et un paramètre de périodicité $\tau$. Le paramètre de périodicité $\tau$ est défini de la manière suivante :

- il correspond, pour les balayages circulaire, électronique et sectoriel, à la durée moyenne entre deux éclairements du récepteur par un signal émis par une même source,
- il correspond, pour les émissions permanentes, à la durée élémentaire d'écoute $\varepsilon_j$.

La densité de probabilité utilisée pour la modélisation de l'ensemble de signaux exprime, soit les connaissances a priori de type statistique que l'on a sur la situation tactique (proportion de présence de signaux en fonction de f, b, $\tau$), soit ce que l'on recherche dans une mission et la priorité que l'on attache à chaque émission (priorité de recherche des signaux en fonction de f, b, $\tau$). Elle ne nécessite pas de connaissances précises des signaux que l'on cherche à intercepter.

La densité de probabilité à trois variables n'est pas utilisée telle quelle. Elle est discrétisée en fréquences, sur l'ensemble des fréquences d'écoute j avec j = 1 à J', et en type de balayage b sur un ensemble de types de balayage B comprenant un ou plusieurs types de balayages b pris parmi les émissions permanentes (pour lesquels b= perm), et les balayages circulaire (pour lequel b= circ), sectoriel (pour lequel b= sect), et électronique (pour lequel b= elec), soit B = {perm et/ou circ et/ou sect et/ou elec}.

La densité de probabilité de présence est non nulle, dans le domaine de fréquences, uniquement sur l'ensemble des bandes de fréquence d'écoute j (j=1 à J').

Selon les formules de Bayes, cette densité de probabilité discrétisée est équivalente à :

- une famille de densités de probabilité $p_{j,b}(\tau)$ de présence, dans l'ensemble de signaux, exprimées en fonction d'un paramètre de périodicité $\tau$, et définies pour les ensembles de bandes de fréquence d'écoute j et de types de balayage B,
- et une famille de probabilités de présence $\pi_j$, b, dans l'ensemble de signaux, de signaux émis avec une fréquence comprise dans une bande de fréquence d'écoute j prédéterminée et étant issus d'un type de balayage b prédéterminé, lesdites probabilités de présence étant définies pour l'ensemble des bandes de fréquence d'écoute j avec j= 1 à J' et pour l'ensemble des types de balayage pris en compte dans l'application considérée.

On va maintenant décrire plus précisément l'étape de détermination 100 de la loi de probabilité d'écoute, aussi appelée loi de séquencement, dans le cas où le critère d'optimisation est la minimisation de la probabilité moyenne de non-interception $M(x_j)$ d'un signal sur une durée D. Autrement dit, la grandeur représentative de la proportion de signaux non-interceptés pendant la période d'écoute T et par le récepteur 1 est la probabilité moyenne de non-interception d'un signal sur une durée D (D <=T) . Cette moyenne est réalisée sur l'ensemble de bandes de fréquence d'écoute j et sur l'ensemble B de types de balayage considéré et sur le domaine de paramètres de périodicité [0 ; +∞[.

Le problème à résoudre est le calcul d'une loi de probabilité d'écoute $x_j$ pour chacune des bandes de fréquence (j=1,..,J') qui minimise la probabilité moyenne de non-interception d'un signal sur une durée $D(\tau)$ qui peut dépendre ou non du paramètre de périodicité $\tau$. On considère dans la suite du texte que la probabilité d'écoute $x_j$ de chacune des bandes de fréquence d'écoute j avec j= 1 à J' est non nulle. Les bandes de fréquence d'écoute sont des bandes de fréquence devant effectivement être écoutées par le récepteur.

Cas de l'écoute de signaux issus d'un balayage électronique, (par exemple des radars à balayage électronique).

Dans le cas de l'écoute des radars à balayage électronique, les éclairements successifs du récepteur peuvent être modélisés par un processus de Poisson de paramètre $1/\tau$, avec $\tau$ le paramètre de périodicité désignant l'intervalle de temps moyen entre deux éclairements successifs.

On montre que la probabilité de non-interception, sur une durée D, par un récepteur qui écoute une bande de fréquence d'indice j avec une probabilité $x_j$, d'un signal émis avec une fréquence comprise dans la bande de fréquence d'indice j par une source effectuant un balayage électronique caractérisé par un paramètre de périodicité $\tau$ est donnée par l'expression suivante :

$$f_{elec}(j,D,\tau) = e^{\frac{-x_j D(\tau)}{\tau}}$$

De manière générale, la loi de probabilité d'écoute $x_j$ pour chacune des bandes de fréquence (j=1,.., J') est la loi de probabilité qui minimise la probabilité moyenne de non-interception définie précédemment. On note

$$G_{j,elec}(x_j) = \int_0^\infty e^{-x_j D(\tau)/\tau} p_{j,elec}(\tau) d\tau \quad p_{j,b}(\tau)$$ est une densité de probabilité de présence. C'est ici la densité de probabilité de présence, dans l'environnement du récepteur, de signaux émis avec une fréquence comprise dans la bande de fréquence j et étant issus d'un balayage b (ici b=elec), parmi l'ensemble de signaux émis dans l'environnement du récepteur, ladite densité de présence étant exprimée en fonction du paramètre de périodicité $\tau$, et où $G_{j,b}(x_j)$ est la probabilité moyenne de non-interception, réalisée sur le paramètre de périodicité, d'un signal émis avec une fréquence comprise dans la bande de fréquence d'indice j et issus d'un balayage b (ici b= elec), pour une probabilité d'écoute donnée $X_j$ de la bande j.

Lorsque l'on suppose que l'ensemble des signaux émis dans l'environnement du récepteur est issu d'un balayage électronique, l'étape 100 de détermination de la loi de probabilité comprend une étape d'optimisation consistant à minimiser la moyenne de $G_{j,elec}(x_j)$, sur l'ensemble des bandes de fréquences j avec j= 1 à J', c'est-à-dire qui minimise la probabilité moyenne de non-interception exprimée de la manière suivante : $M(x_j) = \sum_{j=1}^{J'} \pi_{j,elec} G_{j,elec}(x_j)$,

où $\pi_{j,b}$ est la probabilité de présence, dans l'ensemble de signaux émis dans l'environnement du récepteur, de signaux émis avec une fréquence comprise dans la bande de fréquence j et étant issus d'un balayage b. Ici, b= elec.

Le problème d'optimisation consiste donc à chercher la loi de probabilité de présence $X_j$ qui minimise la probabilité de non interception, soit :

$$\underset{x_j}{Min} \sum_{j=1}^{J'} \pi_{j,elec} G_{j,elec}(x_j).$$

La solution de cette étape d'optimisation minimise la probabilité de non-interception de signaux émis issu d'un balayage électronique.

Or, dans le cas où on suppose que l'ensemble des signaux émis dans l'environnement du récepteur est issu d'un balayage électronique, $\pi_{j,elec} = \pi_j$ où $\pi_j$ est la probabilité de présence, dans l'ensemble de signaux émis dans l'environnement du récepteur, de signaux émis avec une fréquence comprise dans la bande de fréquence j. Cette probabilité $\pi_j$ est, de manière générale obtenue en sommant, sur l'ensemble B de types de balayage, les probabilités

de présence $\pi_{j,b}$ définies pour ladite bande de fréquence d'écoute d'indice j. Ici, l'ensemble B comprend un seul type de balayage qui est le balayage électronique. $\pi_j$ appartient à l'intervalle ]0 ; 1] et $\sum\limits_{j=1}^{J'} \pi_j = 1$.

Par ailleurs, dans ce cas, $G_{j,elec}(x_j)=G_j(x_j)$ où $G_j(x_j)$ est la probabilité moyenne de non-interception, réalisée sur le paramètre de périodicité, d'un signal émis avec une fréquence comprise dans la bande de fréquence d'indice j, lorsque la probabilité d'écoute de la bande j est $x_j$.

Enfin, $p_{j,elec}(\tau)=p_j(\tau)$ où $p_j(\tau)$ est une densité de probabilité de présence. C'est ici la densité de probabilité de présence de signaux émis avec une fréquence comprise dans la bande de fréquence j, parmi l'ensemble de signaux émis dans l'environnement du récepteur, ladite densité de présence étant exprimée en fonction du paramètre de périodicité $\tau$.

La probabilité moyenne de non-interception est dans ce cas :

$$M(x_j) = \sum_{j=1}^{J'} \pi_j \, G_j\left(x_j\right) \text{ où } G_j\left(x_j\right) = \int_0^\infty e^{-x_j D(\tau)/\tau} \, p_j \, (\tau)d\tau \,.$$

Le problème d'optimisation consiste donc à trouver la loi de probabilité qui minimise la probabilité moyenne de non-interception, soit :

$$\underset{x_j}{Min} \sum_{j=1}^{J'} \pi_j \, G_j\left(x_j\right).$$

Le problème d'optimisation peut être réalisé sous les contraintes suivantes :

$$\sum_{j=1}^{J'} x_j = 1 \quad \text{et } \forall j \ \ 0 \le x_j \le 1.$$

Du point de vue mathématique, un $x_j$ peut être égal à 0 ou 1 puisque $x_j$ est une probabilité. Cependant, ces valeurs sont à exclure du domaine des contraintes car elles conduisent à des situations paradoxales d'un point de vue opérationnel. En effet, $x_j = 0$ correspond au cas où l'opérateur manifeste la volonté d'explorer les radars de la bande j en prescrivant $\pi_{j,elec} \ne 0$ puisque j est dans 1,2,...J', et la réponse du séquencement est que la bande j ne sera jamais visitée ! Cette solution optimise certainement le critère mais n'est pas acceptable opérationnellement. Il en est de même pour $x_j = 1$ pour un j dans 1,2,...J' avec J'> 1 : cela exclut toutes les autres bandes qu'on souhaitait explorer.

En définitive, lorsque J'>1, il faut imposer $0 < x_j < 1$ ; ce qui s'exprime par le fait que le critère doit avoir un minimum sur le domaine sous la seule contrainte d'égalité $\sum\limits_{j=1}^{J'} x_j = 1$.

La solution du problème d'optimisation est donnée par la minimisation du Lagrangien $L(x_j, \lambda)$ de la probabilité moyenne de non-interception $M(x_j)$ qui est explicité dans [2] :

$$L\left(x_j, \lambda\right) = \sum_{j=1}^{J'} \pi_j G_j\left(x_j\right) + \lambda\left(\sum_j x_j - 1\right)$$

Où $\lambda$ est un paramètre de Lagrange
qui conduit au système d'équations :

$$
\begin{cases}
\dfrac{\partial G_j(x_j)}{\partial x_j} + \lambda = 0 \quad j = 1,2,\ldots J' \\[4mm]
\displaystyle\sum_{j=1}^{J'} x_j = 1
\end{cases}
$$

Ces équations ne sont couplées que par $\lambda$, et sont donc assez faciles à résoudre. La solution passe par une évaluation numérique de l'intégrale $G_j(x_j)$ et de sa dérivée.

La solution est unique et est un minimum (la matrice des dérivées secondes est positive).

Pour les autres types de balayage qui seront abordés dans la suite du texte, on est conduit à résoudre le même type d'équations.

Dans les cas pratiques, on peut introduire une relation entre la durée $D(\tau)$ et le paramètre de périodicité $\tau$. On considère, par exemple, que $D(\tau)$ est une fonction croissante de $\tau$. Cela permet de simplifier l'étape d'optimisation.

On peut proposer $D(\tau)=\alpha_j\,\tau$ $(\alpha_j > 0)$, ou plus simplement $D(\tau)=\alpha\,\tau$ $(\alpha > 0$, coefficient de proportionnalité indépendant de la bande j). Autrement dit, le rapport entre la durée $D(\tau)$, et le paramètre de périodicité $\tau$ est positif. Les calculs sont donnés dans ce dernier cas.

En posant donc $\alpha=D(\tau)/\tau$ , et en notant J' le nombre de sous-bandes tel que $x_j$ est non nul, la résolution dans ce cas se fait en minimisant le critère d'optimisation. Autrement dit, on cherche à déterminer une loi de probabilité $X_j$ qui vérifie :

$$
\underset{x_j}{Min} \sum_{j=1}^{J'} \left( \pi_j e^{-\alpha x_j} \right) \text{ sous la contrainte } \sum_{j=1}^{J'} x_j = 1
$$

En introduisant un paramètre de Lagrange $\lambda$, on cherche les $x_j$ en minimisant le Lagrangien:

$$
\sum_{j=1}^{J'} \left( \pi_j e^{-\alpha x_j} \right) + \lambda \left( \sum_{j=1}^{J'} x_j - 1 \right) \quad ;
$$

ce qui donne la valeur explicite des $x_j$ pour j= 1 à J' :

$$
x_j = \frac{1}{J'} + \frac{1}{\alpha} \left( \ln \pi_j - \frac{1}{J'} \sum_{k=1}^{J'} \ln \pi_k \right) \tag{E1}
$$

Où $\pi_k$ est la probabilité de présence de signaux présentant une fréquence comprise dans la bande de fréquence d'écoute d'indice k. Elle est obtenue en sommant, sur l'ensemble B de types de balayage, les probabilités de présence $\pi_{j,b}$, définies pour ladite bande de fréquence d'indice k. ici l'ensemble B comprend un seul type de balayage b= elec.

En résumé $\pi_k$ appartient à l'intervalle ]0 ; 1] et $\displaystyle\sum_{k=1}^{J'} \pi_k = 1$ .

On montre aussi que, pour chaque bande de fréquence j, la durée moyenne entre deux interceptions consécutives, par le récepteur, d'un signal issu d'une source réalisant un balayage électronique caractérisé par le paramètre de périodicité $\tau$ est $\tau/x_j$ lorsque le séquencement est effectué par tirage aléatoire sans mémoire selon la loi de probabilité donnée par la formule [E1]. Cette valeur est considérée, par l'homme du métier, comme l'idéal de l'interception.

Cas de l'écoute de signaux issus d'un balayage circulaire (par exemple un ensemble de radars à balayage circulaire) :

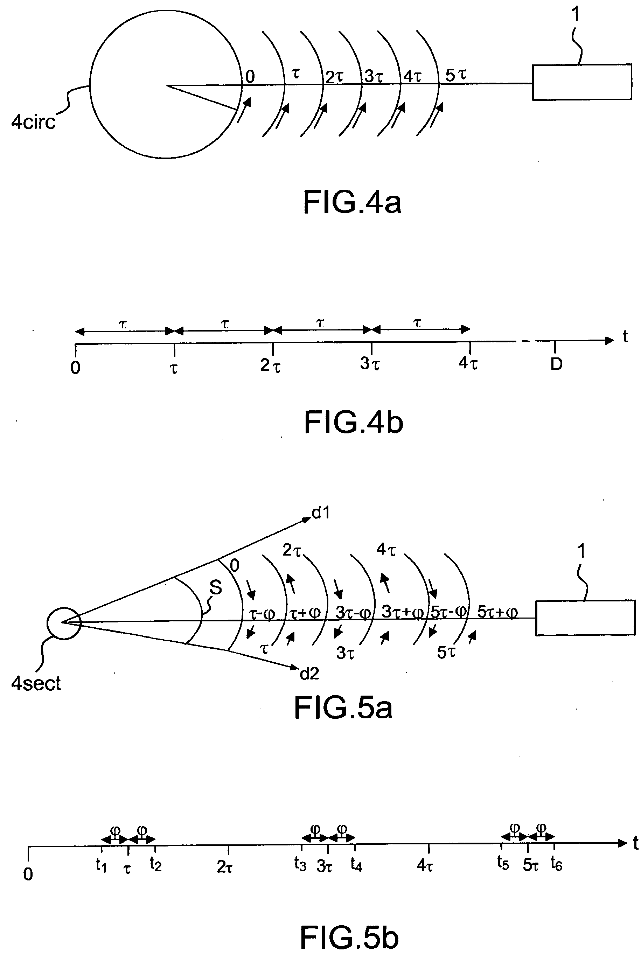

Les figures 4a et 4b représentent les instants d'éclairement d'un récepteur 1 par des signaux issus d'une source 4circ effectuant un balayage circulaire dans le sens des flèches de la figure 4a.

Lorsqu'une source fonctionne selon un balayage circulaire, elle éclaire le récepteur à intervalles de temps réguliers. L'intervalle de temps séparant deux éclairements successifs est égal au paramètre de périodicité $\tau$. Ce paramètre de périodicité est, par exemple, égal à la période de rotation de la source qui est une antenne d'un radar.

On montre que la probabilité de non-interception, sur une durée $D(\tau)$, par un récepteur qui écoute une bande de fréquence d'indice j avec une probabilité $x_j$, d'un signal émis avec une fréquence comprise dans la bande de fréquence d'indice j et étant issu d'un balayage circulaire caractérisé par un paramètre de périodicité $\tau$ est donnée par l'expression suivante :

$$f_{circ}(j, D, \tau) = (1 - x_j)^{[D(\tau)/\tau]}$$

avec $[D(\tau)/\tau]$ désignant la partie entière de $D(\tau)/\tau$.

On note $G_{j,circ}(x_j) = \int_0^\infty f_{circ}(j, D, \tau) p_{j,circ}(\tau) d\tau$

Lorsque l'on suppose que l'ensemble des signaux émis dans l'environnement du récepteur est issu d'un balayage circulaire, l'étape 100 de détermination de la loi de probabilité comprend une étape d'optimisation consistant à minimiser la moyenne de $G_{j,circ}(x_j)$, sur l'ensemble des bandes de fréquences j avec j= 1 à J', c'est-à-dire qui minimise la probabilité moyenne de non-interception exprimée de la manière suivante :

$$M(x_j) = \sum_{j=1}^{J'} \pi_{j,circ} \; G_{j,circ}(x_j)$$

Le problème d'optimisation consiste donc à chercher la loi de probabilité xj avec j= 1, .., J' qui vérifie

$$\underset{x_j}{Min} \sum_{j=1}^{J'} \pi_{j,circ} \; G_{j,circ}(x_j).$$ La solution de cette étape d'optimisation minimise la probabilité de non-interception de signaux émis issu d'un balayage circulaire.

Or, dans le cas où on suppose que l'ensemble des signaux émis dans l'environnement du récepteur est issu d'un balayage circulaire, $\pi_{j,circ} = \pi_j$, $\quad G_{j,circ}(x_j) = G_j(x_j))$ et $p_{j,circ}(\tau) = p_j(\tau)$.

La probabilité moyenne de non-interception est donc, dans ce cas :

$$M(x_j) = \sum_{j=1}^{J'} \pi_j \; G_j(x_j) \text{ où } G_j(x_j) = \int_0^\infty (1 - x_j)^{[D(\tau)/\tau]} p_j(\tau) d\tau$$

Le problème d'optimisation consiste donc à trouver la loi de probabilité qui minimise la probabilité moyenne de non-interception, soit :

$$M(x_j) = \underset{x_j}{Min} \sum_{j=1}^{J'} \pi_j \; G_j(x_j).$$

Le problème d'optimisation est réalisé sous la contrainte suivante, comme nous l'avons vu précédemment :

$$\sum_{j=1}^{J'} x_j = 1.$$

En choisissant $\alpha=D(\tau)/\tau$ constant et entier, la probabilité moyenne de non- interception s'exprime de la manière suivante :

$$M(x_j) = \sum_{j=1}^{J'} \left( \pi_j \left(1 - x_j\right)^{\alpha} \right)$$

La résolution dans ce cas se fait en déterminant une loi de probabilité $x_j$ qui vérifie :

$$\underset{x_j}{Min} \sum_{j=1}^{J'} \left( \pi_j \left(1 - x_j\right)^{\alpha} \right) \quad \alpha \text{ entier positif. sous la contrainte } \sum_{j=1}^{J'} x_j = 1$$

En introduisant un paramètre de Lagrange X, on cherche les $x_j$ en minimisant le Lagrangien de la probabilité moyenne de non-interception qui est:

$$\sum_{j=1}^{J'} \left( \pi_j \left(1 - x_j\right)^{\alpha} \right) + \lambda \left( \sum_{j=1}^{J'} x_j - 1 \right)$$

Ceci conduit aux valeurs suivantes de $x_j$ pour j= 1, ..., J':

$$x_j = 1 - \left(\frac{1}{\pi_j}\right)^{\frac{1}{\alpha-1}} \frac{J'-1}{\sum_{k=1}^{J'} \left( \pi_k^{\frac{1}{1-\alpha}} \right)} \qquad [E2]$$

Cas de l'écoute de signaux émis depuis une source effectuant un balayage sectoriel (par exemple un ensemble de radar à balavage sectoriel.

Sur la figure 5a on a représenté une source 4sect effectuant un balayage sectoriel dans un secteur présentant un angle d'ouverture S et les instants d'émission respectifs $(0, 2\tau, 4\tau)$ et $(\tau, 3\tau, 5\tau)$ du rayonnement selon les directions extrêmes respectives d1 et d2 délimitant le secteur. $2\tau$ correspond donc au temps mis par le radar 4 pour balayer dans les deux sens le secteur d'angle S. Le paramètre de périodicité $\tau$ est donc la demi-période aller-retour du balayage du secteur S. Sur l'axe reliant la source 4sect et le récepteur 1, on a noté les instants d'éclairement du récepteur 1 par le signal émis par le radar. $\varphi$ est l'intervalle de temps entre l'éclairement du récepteur et le changement de sens du balayage.

Sur la figure 5b, on a placé sur l'axe temporel t des instants successifs d'éclairement t1, t2, t3, t4, t5, t6 du récepteur 1 par un signal émis par le radar à balayage sectoriel 4sect.

On montre que la probabilité de non-interception, sur une durée D, par un récepteur qui écoute une bande de fréquence d'indice j avec une probabilité $x_j$, d'un signal émis avec une fréquence comprise dans la bande de fréquence d'indice j et étant issu d'un balayage sectoriel caractérisé par un paramètre de périodicité $\tau$ est donnée par l'expression suivante : $f_{\sec t}(j, D, \tau) = \left(1 - x_j\right)^{2[D(\tau)/2\tau]} \left(1 - \frac{D(\tau)}{2\tau} x_j + \left[\frac{D(\tau)}{2\tau}\right] x_j \right)$, où $\left[\frac{D(\tau)}{2\tau}\right]$ désignant la partie

entière de D/$2\tau$.

Le calcul se fait en considérant une durée $D(\tau)$ de non-interception soit à partir d'un éclairement intercepté par le récepteur à $\tau$-$\varphi$, soit à partir d'un éclairement intercepté par le récepteur à $\tau$+$\varphi$ et en supposant que ces cas sont équiprobables.

On note $G_{j,\sec t}\left(x_j\right) = \int_0^{\infty} f_{\sec t}(j, D(\tau), \tau) p_{j,\sec t}(\tau) d\tau$ .

Lorsque l'on suppose que l'ensemble des signaux émis dans l'environnement du récepteur est issu d'un balayage sectoriel, l'étape 100 de détermination de la loi de probabilité comprend une étape d'optimisation consistant à minimiser la moyenne de $G_{j,sect}(x_j)$, sur l'ensemble des bandes de fréquences j avec j= 1 à J', c'est-à-dire qui minimise la probabilité moyenne de non-interception exprimée de la manière suivante :

$$M(x_j) = \sum_{j=1}^{J'} \pi_{j,\sec t} \; G_{j,\sec t}\left(x_j\right),$$

Le problème d'optimisation consiste donc à chercher la loi de probabilité de présence $x_j$ qui minimise la probabilité de non interception, soit :

$$\underset{x_j}{Min} \sum_{j=1}^{J'} \pi_{j,\sec t} \; G_{j,\sec t}\left(x_j\right).$$

La solution de cette étape d'optimisation minimise la probabilité de non-interception de signaux émis issus d'un balayage sectoriel. Or, dans le cas où on suppose que l'ensemble des signaux émis dans l'environnement du récepteur est issu d'un balayage sectoriel, $\pi_{j,}$sect $=\pi_j$, $G_{j,\sec t}\left(x_j\right) = G_j\left(x_j\right)$ et $p_{j,\sec t}(\tau) = p_j(\tau)$.

La probabilité moyenne de non-interception est donc, dans ce cas :

$$M(x_j) = \sum_{j=1}^{J'} \pi_j \; G_j\left(x_j\right)$$

où

$$G_j\left(x_j\right) = \int_0^{\infty} \left(1 - x_j\right)^{2[D(\tau)/2\tau]} \left(1 - \frac{D(\tau)}{2\tau} x_j + \left[\frac{D(\tau)}{2\tau}\right] x_j\right) p_j \; (\tau) d\tau.$$

Le problème d'optimisation consiste donc à trouver la loi de probabilité qui minimise la probabilité moyenne de non-interception, soit :

$$\underset{x_j}{Min} \sum_{j=1}^{J'} \pi_j \; G_j\left(x_j\right) =$$

$$\underset{x_j}{Min} \sum_{j=1}^{J'} \pi_j \int_0^{\infty} \left(1 - x_j\right)^{2[D(\tau)/2\tau]} \left(1 - \frac{D(\tau)}{2\tau} x_j + \left[\frac{D(\tau)}{2\tau}\right] x_j\right) p_j \; (\tau) d\tau$$

Le problème d'optimisation est réalisé sous la contrainte suivante, comme nous l'avons vu précédemment :

$$\sum_{j=1}^{J'} x_j = 1.$$

On donne ci-après un exemple de résolution de ce problème d'optimisation pour $\alpha = D(\tau)/\tau$ constant, entier et pair.

La probabilité moyenne de non- interception s'exprime de la manière suivante : $\sum_{j=1}^{J'} \left( \pi_j (1 - x_j)^\alpha \right)$

La résolution dans ce cas se fait en déterminant la loi de probabilité $X_j$ qui vérifie :

$$\underset{x_j}{Min} \sum_{j=1}^{J'} \left( \pi_j (1 - x_j)^\alpha \right) \ \alpha \text{ entier} \geq 2 \ \text{ sous la contrainte } \sum_{j=1}^{J'} x_j = 1$$

La solution est donnée par l'équation [E2].

Cas de signaux émis depuis une source émettant selon une émission permanente :

Il s'agit des signaux détectables en permanence (signaux de communication ou radars vus sur les diffus).

On explique ci-dessous la résolution du problème d'optimisation dans le cas où la durée d'écoute élémentaire $\varepsilon$ est unique, c'est-à-dire la même pour toutes les bandes de fréquence. Toutefois, l'homme du métier peut aisément appliquer cette méthode pour résoudre le problème d'optimisation dans le cas où la durée d'écoute élémentaire $\varepsilon_j$ est une fonction de la bande de fréquence j.

La probabilité de non-interception, sur une durée $D(\tau)$, par un récepteur qui écoute une bande de fréquence d'indice j avec une probabilité $X_j$ pendant une durée élémentaire $\varepsilon$, d'un signal émis avec une fréquence comprise dans la bande de fréquence d'indice j et étant issu d'une émission permanente est donnée par l'expression suivante :

$$f_{j,perm}(j, D, \tau) = (1 - x_j)^{[D(\tau)/\tau]}$$

avec $[D(\tau)/\tau]$ désignant la partie entière de $D(\tau)/\tau$.
Le paramètre de périodicité $\tau$ est égal à la durée d'écoute élémentaire $\varepsilon$.

On note $G_{j,perm}(x_j) = \int_0^\infty f_{perm}(j, D, \tau) p_{j,perm}(\tau) d\tau$ Par ailleurs, $P_{j,perm}(\tau i)$ est une distribution de Dirac pour $\tau = \varepsilon$, alors :

$$G_{j,perm}(x_j) = f_{perm}(j, D, \tau)$$

Lorsque l'on suppose que l'ensemble des signaux émis dans l'environnement du récepteur est issu d'une émission permanente, l'étape 100 de détermination de la loi de probabilité comprend une étape d'optimisation consistant à minimiser la moyenne de $G_{j,perm}(x_j)$, sur l'ensemble des bandes de fréquences j avec j= 1 à J', c'est-à-dire qui minimise la probabilité moyenne de non-interception exprimée de la manière suivante :

$$: M(x_j) = \sum_{j=1}^{J'} \pi_{j,perm} \ G_{j,perm}(x_j),$$

Le problème d'optimisation consiste donc à chercher la loi de probabilité de présence $x_j$ qui minimise la probabilité de non interception, soit :

$$\underset{x_j}{Min} \sum_{j=1}^{J'} \pi_{j,perm} \ G_{j,perm}(x_j).$$

La solution de cette étape d'optimisation minimise la probabilité de non-interception de signaux émis issus d'une émission permanente.

Or, dans le cas où on suppose que l'ensemble des signaux émis dans l'environnement du récepteur est issu d'une émission permanente, $\pi_{j,perm} = \pi_j$. Par ailleurs, dans ce cas, $G_{j,perm}(x_j) = G_j(x_j)$).

Le problème d'optimisation consiste donc à trouver la loi de probabilité qui minimise la probabilité moyenne de non-interception, soit :

$$\underset{x_j}{Min} \sum_{j=1}^{J'} \pi_j \left(1 - x_j\right)^{[D(\tau)/\tau]}.$$

Le problème d'optimisation est réalisé sous la contrainte suivante, comme nous l'avons vu précédemment :

$$\sum_{j=1}^{J'} x_j = 1.$$

En prenant $\alpha = D(\tau)/\tau$ constant et entier, la résolution dans ce cas se fait en calculant :

$$\underset{x_j}{Min} \sum_{j=1}^{J'} \left(\pi_j \left(1 - x_j\right)^\alpha\right) \; \alpha \text{ entier} \geq 2 \; \text{ sous la contrainte } \sum_{j=1}^{J'} x_j = 1$$

La solution est donnée par l'équation [E2].

On montre que, pour chaque bande de fréquence j, la durée moyenne entre deux interceptions consécutives, par le récepteur, d'un signal issu d'une émission permanente, ou d'un balayage circulaire ou sectoriel, définie par son paramètre de périodicité $\tau$ est : $\tau/x_j$, lorsque le séquencement est effectué par tirage aléatoire sans mémoire selon la loi de probabilité donnée par la formule [E2].

Optimisation dans le cas général

On rappelle que la loi de probabilité d'écoute $X_j$ pour j= 1 à J' est calculée en minimisant la probabilité moyenne de non-interception $M(x_j)$ d'un signal sur une durée $D(\tau)$. Cette moyenne est réalisée sur l'ensemble des bandes de fréquence d'écoute j et sur l'ensemble B des types de balayage considérés et sur le domaine de paramètres de périodicité $[0 ; +\infty[$.

Autrement dit, lorsque l'on prend en compte différents types de balayage, on minimise la probabilité moyenne de non interception sur tous les types de balayages que l'on souhaite considérer.

Plus précisément, on cherche à déterminer la loi de probabilité $X_j$ qui minimise la somme, réalisée sur l'ensemble des types de balayage considérés B, de la probabilité moyenne de non-interception, par le récepteur, d'un signal émis avec une fréquence j comprise dans une bande de fréquence d'écoute j (prise parmi l'ensemble de bandes de fréquence d'écoute) et issu d'un type de balayage (pris parmi l'ensemble des types de balayage considérés B), ladite moyenne étant réalisée sur le domaine du paramètre de périodicité et sur l'ensemble des bandes de fréquence d'écoute.

Autrement dit, le critère à minimiser est une somme pondérée, par la probabilité de présence d'un signal présentant une fréquence comprise dans la bande de fréquence d'écoute j, sur tous les types de balayage considérés, des différents critères que l'on cherche à minimiser pour les différents types de balayage pris indépendamment.

Autrement dit, la loi de probabilité d'écoute $X_j$ pour chacune des bandes de fréquence (j=1,..,J) est la loi de probabilité qui permet d'obtenir le minimum de la probabilité moyenne de non-interception H.

Cette moyenne est $H(x_j) = \sum_b \sum_{j=1}^{J'} \pi_{j,b} \, G_{j,b}(x_j)$, quel que soit j= 1 à J', où $\sum_b$ est la somme sur les types de balayage compris dans $b$ l'ensemble des types de balayage B considéré.

Dans le cas où la fonction $D(\tau)$ est proportionnelle au paramètre de périodicité, quel que soit le type de balayage, la probabilité moyenne de non-interception est exprimée de la manière suivante : $H(X_j) = H1(X_j) + H2(x_j)$ ou $H1(x_j)$ ou $H2(x_j)$

où

$$H1(x_j) = \sum_{b1} \sum_{j=1}^{J'} \left( \pi_{j,b1}(1-x_j)^{\alpha_{b1}} \right) \text{ et où } H2(x_j) = \pi_{j,elec} e^{-\alpha_{elec} x_j} \, ,$$

où $\sum_{b1}$ est la somme réalisée sur les types de balayage appartenant à un sous ensemble de types de balayage B1 {circ et/ou sect et/ou perm}. Autrement dit, le sous-ensemble B1 comprend au moins un type de balayage pris parmi les balayages circulaire, sectoriel et les émissions permanentes et où $\pi_j$,b1 est la probabilité de présence, dans l'ensemble de signaux émis dans l'environnement du récepteur, de signaux émis avec une fréquence comprise dans la bande de fréquence j et étant issus d'un balayage b1. Autrement dit $\pi_j$,b1 et $\pi_{j,elec}$ appartiennent à l'intervalle ]0 ; 1] et

$$\sum_{j=1}^{J'} \pi_{j,elec} + \sum_{j=1}^{J'} \sum_{b1} \pi_{j,b1} = 1 .$$ $\alpha_{b1}$ est le rapport entre la durée d'écoute et le paramètre de périodicité. $\alpha_{elec}$ est égal au rapport entre la durée d'écoute et le paramètre de périodicité.

Le problème d'optimisation consiste à trouver la loi de probabilité qui minimise cette moyenne sous les contraintes $\sum_{j=1}^{J'} x_j = 1$ et 0< $x_j$ <1.

C'est une minimisation d'une fonction avec une contrainte d'égalité et un ensemble de contraintes d'inégalités. L'homme du métier sait résoudre ce type de problème d'optimisation en utilisant par exemple des méthodes décrites dans [3] ou [2] (méthodes du lagrangien). Nous donnons ci-après un exemple de résolution dans le cas où tous les types de balayage sont pris en compte, c'est-à-dire que :

$$H(x_j) = \pi_{j,elec} G_{j,elec}(x_j) + \pi_{j,circ} G_{j,circ}(x_j) + \pi_{j,sect} G_{j,sect}(x_j) + \pi_{j,perm} G_{j,perm}(x_j)$$

quel que soit j = 1 à J'.

Si J' vaut 1, une seule bande est écoutée avec un $X_j$ valant 1 (cas trivial). Si J'>1, la méthode ci-dessous est un exemple de calcul des $x_j$ non nuls.

En dérivant la fonction H par rapport aux $X_j$ on obtient, pour j=1,...,J':

$$\frac{\partial H}{\partial x_j} = -F_j(x_j)$$

Un calcul de dérivée montre que les $F_j(x_j)$ sont des fonctions décroissantes pour $0 \le x_j \le 1$.
La résolution se fait par itérations successives, jusqu'à atteindre un seuil de précision sur les $X_j$.

Principe de résolution du système d'équations :

En notant X le vecteur colonne de dimension J' constitué des J' valeurs $x_j$ :

$$X = \begin{bmatrix} x_1 \\ x_2 \\ ... \\ x_{J'} \end{bmatrix}$$

la résolution consiste à trouver, par itérations successives, un vecteur X qui rend minimum l'expression H(X) tout en

respecting les contraintes $\sum_{j=1}^{J'} x_j = 1$ et $\forall j \ 0 < x_j < 1$.

La valeur initiale $X^0$ est fixée à :

$$X^0 = \begin{bmatrix} x_1^0 \\ ... \\ x_j^0 \\ ... \\ x_{J'}^0 \end{bmatrix} \quad \text{avec } x_j^0 = 1/J' \quad \text{pour} \quad j = 1,...,J'$$

Cette valeur a la propriété d'être sur le plan respectant la contrainte $\sum_{j=1}^{J'} x_j = 1$ et d'être dans la partie de l'espace respectant les contraintes d'inégalités $0 < x_j < 1$.

Les valeurs suivantes sont calculées, comme nous le verrons ci-dessous, par une descente de gradient sous contrainte de l'égalité $\sum_{j=1}^{J'} x_j = 1$ et des inégalités $0 < x_j < 1$. Le vecteur $V = Grad\left(H\left(X^i\right)\right) = \begin{bmatrix} -F_1\left(x_1^i\right) \\ ... \\ -F_j\left(x_j^i\right) \\ ... \\ -F_{J'}\left(x_{J'}^i\right) \end{bmatrix}$ indique la direction

de plus forte pente pour minimiser H.

Le vecteur $U = \left(\dfrac{1}{\sqrt{J'}}, \dfrac{1}{\sqrt{J'}}, ..., \dfrac{1}{\sqrt{J'}}\right)^T$ est le vecteur unitaire orthogonal au plan d'équation $\sum_j x_j = 1$ dans

l'espace des $X_j$ pour $j = 1,...,J'$. Le vecteur $W = V - (U^T V)U$ *est* la projection sur le plan $\sum_{j=1}^{J'} x_j = 1$ de la direction de plus forte pente pour minimiser H. Ce vecteur a des composantes qui s'écrivent :

$$w_j = v_j - \frac{1}{J'}\sum_k v_k = -F_j\left(x_j^i\right) + \frac{1}{J'}\sum_k F_k\left(x_k^i\right)$$

Pour passer d'une étape i à une étape i+1, on calcule :

$$X^{i+1} = X^i - s^i W^i$$

La valeur $s^i$ est une valeur de pas strictement positive pour se déplacer selon la direction $W^i$.

Le choix de $s^i$ est contraint par les inégalités $0 < x_j < 1$ *pour* $j = 1,...,J'$. L'ensemble des inégalités donne un intervalle admissible pour $s^i$. On choisit $s^i$ qui minimise H parmi un ensemble de valeurs testées dans l'intervalle admissible pour $s^i$.

L'arrêt des itérations de descente de gradient a lieu dès que l'une des conditions suivantes est réalisée :

- un nombre d'itération maximal est atteint,
- la norme du gradient $\|Grad(H(X^i))\|$ est inférieure à un seuil.

Ceci donne les valeurs $x_j$ qui sont les probabilités d'écoute des différentes bandes de fréquence d'écoute j.

Dans une réalisation particulière, on peut imposer $D(\tau)=\alpha\tau$ avec $\alpha$ constant et entier pair.

Dans *ce* cas :

$$H(x_j) = \pi_{j,elec}e^{-\alpha_{elec}x_j}$$
$$+ \pi_{j,circ}(1-x_j)^{\alpha_{circ}} + \pi_{j,\sec t}(1-x_j)^{\alpha_{\sec t}} + \pi_{j,perm}(1-x_j)^{\alpha_{perm}}$$

quel que soit j = 1 à J'.
et :

$$F_j(x_j) = \alpha_{elec}\pi_{j,elec}e^{-\alpha_{elec}x_j} + \alpha_{circ}\pi_{j,circ}(1-x_j)^{\alpha_{circ}-1}$$
$$+ \alpha_{\sec t}\pi_{j,\sec t}(1-x_j)^{\alpha_{\sec t}-1} + \alpha_{perm}\pi_{j,perm}(1-x_j)^{\alpha_{perm}-1}$$

Conditions à imposer à l'horizon temporel $D(\tau)$

Après avoir trouvé des formules analytiques pour $X_j$ optimisant le critère dans le cas de chaque type de balayage, et avoir donné une méthode numérique d'optimisation dans le cas général, nous proposons de définir ici les conditions a priori que doit vérifier l'horizon temporel, c'est-à-dire la durée d'écoute $D(\tau)$ pour que dans tous les cas $0 < X_j < 1$ si J'>1.
L'explication sera donnée pour $\alpha_{elec} = \alpha_{circ} = \alpha_{sect} = \alpha_{perm} = \alpha$ dans le cas où on tient compte de tous les types de balayage mais est valable si ces facteurs sont différents les uns des autres.
Si on prend en compte tous les types de balayage, on a alors

$$H(x_j) = \sum_j \left( \pi_{j,elec}e^{-\alpha x_j} + (\pi_{j,circ} + \pi_{j,\sec t} + \pi_{j,perm})(1-x_j)^{\alpha} \right)$$

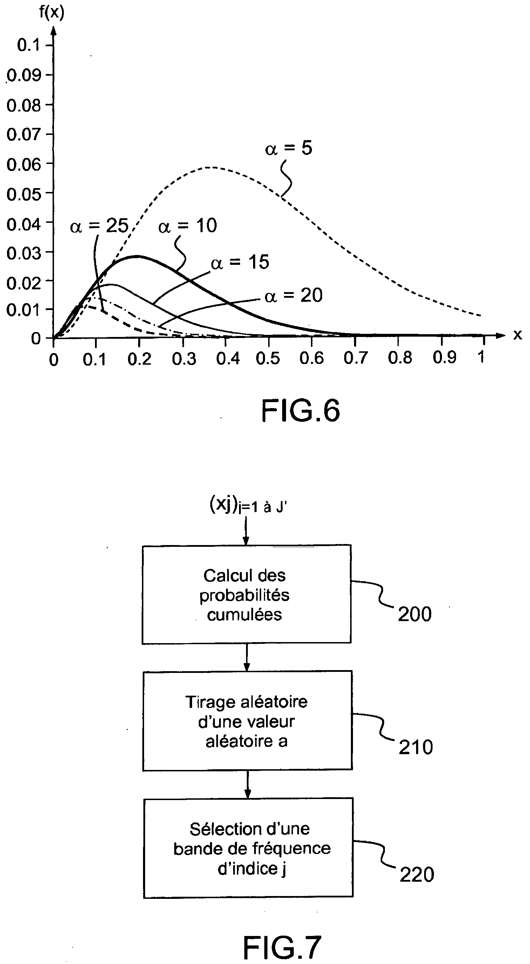

On remarque d'abord, grâce aux courbes représentées sur la figure 6 qui correspondent à la représentation de la fonction $f(x) = e^{\alpha x} - (1-x)^{\alpha}$ en fonction de x pour différentes valeurs de $\alpha$, que $0 \le e^{-\alpha x} - (1-x)^{\alpha} < 0.06$. pour $0 \le x \le 1$ pour $\alpha \ge 5$.
On utilise alors l'approximation :

$$H = \sum_{j=1}^{J'}\pi_j e^{-\alpha x_j} \quad \text{avec} \quad \pi_j = \pi_{j,elec} + \pi_{j,circ} + \pi_{j,\sec t} + \pi_{j,perm}$$

Avec cette approximation, la solution du problème général est donnée par (voir partie sur le balayage électronique) :

$$x_j = \frac{1}{J'} + \frac{1}{\alpha}\left( \ln\pi_j - \frac{1}{J'}\sum_{k=1}^{J'}\ln\pi_k \right) \qquad \text{[E4]}$$

De cette expression on déduit que $0 < X_j < 1$ est toujours possible à condition de choisir $\alpha$ suffisamment grand. Plus précisément, en majorant $x_j$ par 1 et en le minorant par 0, on a pour tout j :

$$\frac{-1}{J'} + \frac{1}{\alpha J'}\sum_{k=1}^{J'}\ln \pi_k < \frac{1}{\alpha}\ln \pi_j < 1 - \frac{1}{J'} + \frac{1}{\alpha J'}\sum_{k=1}^{J'}\ln \pi_k$$

ce qui conduit à imposer les deux conditions suivantes pour $\alpha$ :

$$\alpha > \frac{1}{J'-1}\left( J'\underset{j}{Max}(\ln \pi_j) - \sum_{k=1}^{J'}\ln \pi_k \right)$$

$$\alpha > \sum_{k=1}^{J'}\ln \pi_k - J'\underset{j}{Max}(\ln \pi_j)$$

De l'analyse qui précède, on déduit aussi, dans le cas où $\alpha_{elec} = \alpha_{circ} = \alpha_{sect} = \alpha_{perm} = \alpha$, une valeur initiale déjà très précise pour l'algorithme d'optimisation d'un séquencement opérant sur une situation comportant tous les types de balayages : ce sont les valeurs $x_j$ données par l'équation [E4].

Minimisation de la durée moyenne entre deux interceptions consécutives, par le récepteur, d'un signal émis par une même source.

Dans un deuxième mode de réalisation de l'invention, le critère d'optimisation est la minimisation de la durée moyenne entre deux interceptions consécutives d'un signal émis dans l'environnement du récepteur. Cette moyenne est réalisée sur l'ensemble des bandes de fréquence, sur l'ensemble de types de balayage considérés dans l'application et sur le domaine du paramètre de périodicité [0 ; + ∞[. Autrement dit, la valeur que l'on cherche à minimiser, ici , est la durée moyenne entre deux interceptions consécutives d'un signal émis dans l'environnement du récepteur et issu d'une même source.

Dans les paragraphes ci-dessus, nous avons montré que pour une loi de commande en fréquence selon un tirage aléatoire sans mémoire, la durée moyenne entre deux interceptions consécutives d'un signal présentant une fréquence comprise dans une bande de fréquence d'écoute j et issu d'une même source effectuant un balayage caractérisé par un paramètre de périodicité $\tau$ est $d(j) = \tau/x_j$.

La durée moyenne entre deux interceptions consécutives $K(x_j)$, par le récepteur, d'un signal présentant une fréquence comprise dans une bande de fréquence d'écoute j et issu d'une même source effectuant un balayage caractérisé par un paramètre de périodicité $\tau$, réalisée sur l'ensemble des fréquences d'écoute j avec j= 1 à J' et sur l'ensemble de balayages B est exprimée de la manière suivante en fonction de la probabilité d'écoute $x_j$ :

$$K(x_j) = \sum_b \sum_{j=1}^{J'}\left( \pi_{j,b}\int_0^\infty \frac{\tau}{x_j}p_{j,b}(\tau)d\tau \right)$$

Ceci s'écrit aussi:

$$K(x_j) = \sum_j \left( \pi_{j,elec}\int_0^\infty \frac{\tau}{x_j}p_{j,elec}(\tau)d\tau \right) + \sum_j \left( \pi_{j,circ}\int_0^\infty \frac{\tau}{x_j}p_{j,circ}(\tau)d\tau \right) +$$

$$\sum_j \left( \pi_{j,sect}\int_0^\infty \frac{\tau}{x_j}p_{j,sect}(\tau)d\tau \right) + \sum_j \left( \pi_{j,perm}\int_0^\infty \frac{\tau}{x_j}p_{j,perm}(\tau)d\tau \right)$$

En résumé:

$$K(x_j) = \sum_{j=1}^{J'} \frac{\tau_j}{x_j}$$

où $\tau_j$ est égal à la moyenne du paramètre de périodicité, pour la bande de fréquence d'écoute j, réalisée sur l'ensemble de balayages B à partir des $p_{j,b}$ (t) et des $\pi_{j,b}$ où b prend les valeurs comprises dans l'ensemble de balayage.

Le problème d'optimisation consiste à trouver la loi de probabilité xj qui minimise K (x$_j$). On doit trouver

$$\underset{x_j}{Min}\left(K(x_j)\right) \text{ sous les contraintes } \sum_{j} x_j = 1 \text{ et } 0 < x_j < 1 \text{ pour j=1,2,...,J'}$$

On propose de résoudre $\underset{x_j}{Min}(K)$ sous la seule contrainte $\sum_{j} x_j = 1$, de s'assurer ensuite que la solution obtenue vérifie bien: $0 < x_j < 1$, et correspond à un minimum.

On utilise avantageusement la méthode du lagrangien.

Le Lagrangien de K (xj) s'écrit :

$$\sum_{j=1}^{J'} \frac{\tau_j}{x_j} + \lambda\left(\sum_{j=1}^{J'} x_j - 1\right)$$

Les conditions d'optimalité du premier ordre donnent :

$$\begin{cases} \dfrac{\tau_j}{x_j^2} = \lambda \quad ; \quad j = 1,2,...,J' \\[2em] \displaystyle\sum_{j=1}^{J'} x_j = 1 \end{cases}$$

dont la solution est :

$$x_j = \frac{\sqrt{\tau_j}}{\displaystyle\sum_{k=1}^{J'} \sqrt{\tau_k}} \quad ; \quad j = 1,2,...,J'$$

qui vérifie bien $0 < x_j < 1$, et correspond à un minimum puisque la matrice des dérivées secondes du critère $K(x_j)$ est définie positive.

$\tau_k$ est égal à la moyenne du paramètre de périodicité, pour la bande de fréquence d'écoute k, réalisée sur l'ensemble des balayages B.

Nous allons maintenant décrire un exemple de réalisation de l'étape 110 de génération des consignes d'écoute consécutives par tirage aléatoire parmi un ensemble de consignes d'écoute en respectant la loi de probabilité déterminée lors de l'étape 100.

La méthode générale pour tirer une valeur aléatoire Y selon une loi de probabilité ayant une fonction de répartition R(Y) est de tirer une valeur aléatoire selon une distribution uniforme U sur [0,1] puis de passer par la fonction réciproque R$^{-1}$ de la fonction de répartition: Y= R$^{-1}$(U). Voir par exemple [4] en page 116.

L'étape de tirage aléatoire comprend trois étapes qui sont respectivement illustrées sur la figure 7.

Elle comprend une étape de calcul 200 des probabilités cumulées d'écoute pour toutes les bandes de fréquence d'écoute à partir de la loi de probabilité d'écoute. La probabilité cumulée P$_j$ d'écoute d'une bande de fréquence d'écoute d'indice j est égale à la somme des probabilités d'écoute de la bande de fréquence j et de celles des bandes de fréquences d'écoute d'indice inférieur à l'indice de ladite bande de fréquence d'écoute.

Elle comprend également une étape 210 de tirage d'une valeur aléatoire a comprise entre 0 et 1 selon une loi uniforme (tirage d'une valeur aléatoire a uniformément répartie entre 0 et 1). Cette étape peut également être une étape de lecture d'une valeur dans une table de valeurs aléatoires uniformément réparties entre 0 et 1.

Elle comprend une dernière étape de sélection 220, parmi l'ensemble de bandes de fréquences d'écoute d'indice j avec j = 1, .., J', la bande d'écoute comprenant l'indice le plus petit tel que :

$$P(j-1) < a \text{ et } a \leq P(j) \text{ pour } j > 1$$

et tel que $P(j) \geq a$ et non nulle pour j = 1.

L'étape de commande du récepteur 120 peut être mise en oeuvre uniquement une fois que l'étape de détermination des consignes d'écoute consécutives supposées devoir être écoutées, c'est-à-dire devant être écoutées, sur une période d'écoute supérieure aux durées d'écoute élémentaire est écoulée ou bien à l'issue de la détermination de chaque consigne d'écoute.

Outre les avantages précédemment cités, l'invention permet de prendre en compte des émissions radar (pouvant réaliser différents types de balayage) et des émissions de communication dans un même séquencement.

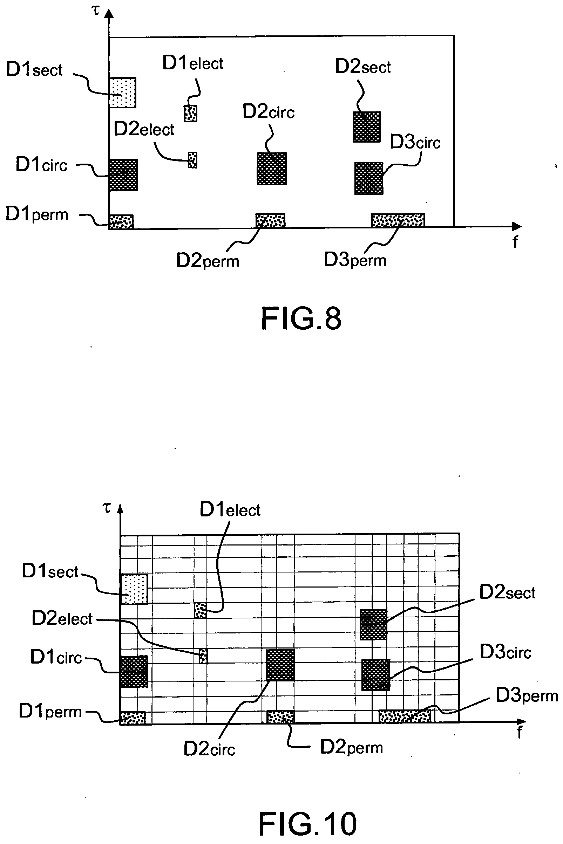

On va maintenant décrire, en référence aux figures 8 et suivantes une étape de prétraitement 90 dans laquelle on calcule une densité de probabilité de présence $p_{j,b}(\tau)$ et/ou une probabilité de présence $\pi_{j,b}$ pour un type de balayage.

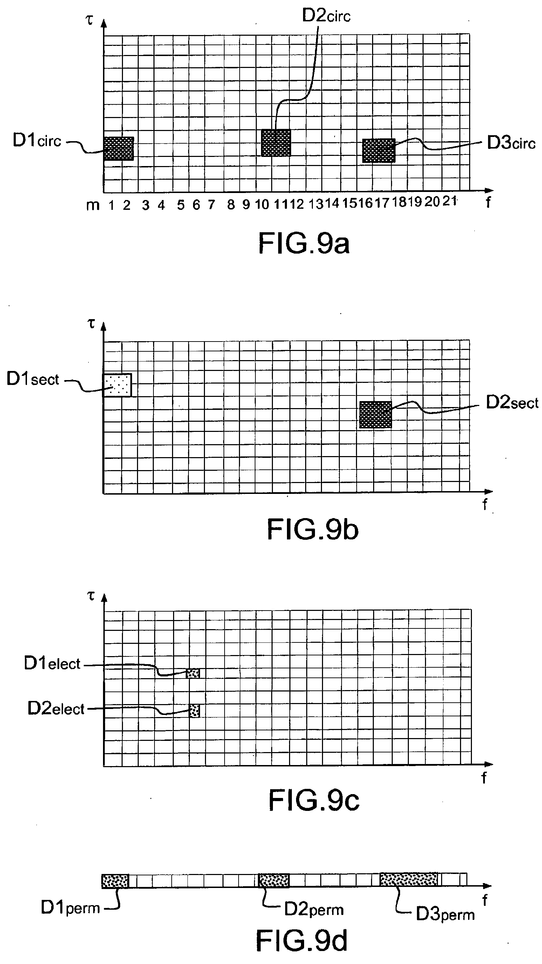

En entrée du procédé de séquencement, on n'a pas directement les densités de probabilités de présence $p_{j,b}(\tau)$ ou les probabilités de présence $\pi_{j,b}$. Sur la figure 8, on a représenté un ensemble de domaines d'intérêt définis pour des balayages électronique, circulaire, sectoriel et pour des émissions permanentes. On voit trois domaines d'intérêt définis pour le balayage circulaire D1circ, D2circ, D3circ, 2 domaines d'intérêt définis pour le balayage sectoriel D1sect et D2sect, 2 domaines d'intérêt définis pour le balayage électronique D1elect , D2elect et 3 domaines d'intérêt définis pour les émissions permanentes D1perm, D2perm et D3perm. Ces domaines d'intérêt s'étendent, pour les balayages circulaires, sectoriel et électroniques, dans un domaine fréquence-paramètre de périodicité (visibles sur les figures 9a à 9c), selon l'axe des fréquences f et selon un axe de paramètre de périodicité τ, et pour les émissions permanentes, selon l'axe des fréquences (pour plus de clarté, on a artificiellement épaissi ces derniers domaines d'intérêt selon l'axe des paramètres de périodicité sur la figure 8).

A chaque domaine d'intérêt est associé un degré de priorité pris parmi un ensemble de degrés de priorités. Le différents degrés de priorité sont différenciés sur la figure 8 par les motifs remplissant les domaines.

Ces domaines d'intérêt associés à des degrés de priorité sont :

- soit générés à partir d'une bibliothèque d'émissions connues que l'on cherche à écouter à nouveau : les degrés de priorité associés à des domaines d'intérêt correspondent alors à des densités de probabilité de présence à priori de signaux sur les domaines d'intérêt considérés,
- soit générés par un opérateur pour focaliser l'attention du récepteur sur des domaines particuliers : les degrés de priorités associés à ces domaines correspondent alors à des priorités d'écoute pour la mission considérée.

L'étape 90 de prétraitement comprend, comme visible sur les figures 9a à 9c, une étape consistant, à découper l'axe des fréquences en un deuxième ensemble de deuxièmes bandes de fréquences d'indice m avec m = 1 à M où M est au moins égal à J' et, l'axe des paramètres de périodicité en bandes de paramètres de périodicité selon un pas de paramètre de périodicité prédéterminé, de façon à délimiter des cases occupant chacune une deuxième bande de fréquence d'indice M une bande de paramètre de périodicité d'indice I.

Sur les figures 9a à 9d, les deuxièmes bandes de fréquence présentent la même largeur. Elles peuvent aussi présenter des largeurs différentes pourvu qu'elles présentent une largeur inférieure ou égale à la largeur maximale de la bande de fréquence de réception susceptible d'être écoutée par le récepteur.

L'étape 90 comprend :

- pour chaque type de balayage de l'ensemble B appartenant à l'ensemble formé par les balayages électronique, circulaire et sectoriel, une première étape de cumul dans laquelle on associe à chaque case du domaine fréquence-paramètre de périodicité associé audit type de balayage, un premier produit correspondant au produit de la proportion de la dite case qui est couverte par un domaine d'intérêt défini pour ledit type de balayage et du degré d'intérêt qui est associé audit domaine d'intérêt,
- lorsque l'ensemble B comprend des émissions permanentes, une deuxième étape de cumul dans laquelle on associe à chaque deuxième bande de fréquence, un deuxième produit correspondant au produit de la proportion de ladite deuxième bande de fréquence qui est couverte par un domaine d'intérêt défini pour les émissions permanentes et du degré d'intérêt qui est associé audit domaine,

- une étape de calcul d'une somme globale correspondant à la somme, de la somme des premiers produits réalisée sur tous les types de balayage de l'ensemble B appartenant à l'ensemble formé par les balayages circulaire, sectoriel et électronique, et des deuxièmes produits,
- une étape de normalisation consistant à calculer le rapport entre les premiers produits respectifs et la somme globale et entre les deuxièmes produits respectifs et la somme globale.

A la fin de cette étape, on obtient, pour chaque case définie pour les balayages circulaire, électronique et sectoriels, la valeur de la densité de probabilité de présence a priori définie sur la bande de paramètre de périodicité sur laquelle s'étend la case, pour la deuxième bande de fréquence sur laquelle s'étend la case et pour le type de balayage considéré.

Pour les émissions permanentes, le résultat obtenu, pour chaque deuxième fréquence la probabilité de présence a priori, dans l'environnement du récepteur, de signaux issus d'émissions permanentes et étant émis avec une fréquence comprise dans la deuxième bande de fréquence.

Avantageusement, le procédé comprend, pour au moins un type de balayage de l'ensemble B pris parmi les balayages circulaire, sectoriel et électronique, une étape de calcul, des probabilités de présence dans l'environnement du récepteur, de signaux émis avec une fréquence comprise dans chaque deuxième bande de fréquence et étant issus du balayage considéré en sommant les densités de probabilités de présence obtenues pour ladite deuxième bande de fréquence et pour le balayage considéré

Avantageusement, les position et largeur des deuxièmes bandes de fréquence sont choisies, connaissant une valeur maximale de la largeur de la bande de fréquence de réception du récepteur, de manière à minimiser le nombre de deuxièmes bandes de fréquence présentant une largeur égale ou inférieure à la valeur maximale de la largeur de la bande de fréquence de réception et qui sont au moins partiellement couvertes par un domaine d'intérêt défini pour l'une quelconque des balayages de l'ensemble B (voir figure 10). L'avantage d'ajuster le positionnement des bandes de fréquence par rapport aux domaines d'intérêt à écouter est de réduire le nombre J' de bandes de fréquence à écouter, et donc de pouvoir revenir plus souvent sur les différentes bandes de fréquence.

Les bandes de fréquences d'indices j avec j= 1 à J' sont les bandes de fréquences qui parmi le deuxième ensemble de fréquence présentent une probabilité de présence non nulle pour au moins un type de balayage.

Plus généralement, l'invention se rapporte à un procédé de séquencement d'un récepteur lorsque des tâches ou des ressources doivent être séquencées selon différentes durées et avec des contraintes ou non de rendez-vous définies par des plages de périodicités.

En résumé l'invention se rapporte à un procédé de séquencement d'un récepteur sur une période d'observation T comprenant une étape de génération de consignes d'observations successives Cg supposées devoir être exécutées successivement par le récepteur. Les consignes d'observation sont obtenues par tirage aléatoire sans mémoire parmi un ensemble de consignes d'observations définissant chacune une durée d'observation élémentaire $\varepsilon_j$, et une partie observable j d'un domaine d'observation pris parmi un ensemble J' de parties observables dudit domaine d'observation que le récepteur est supposé devoir observer pendant la période d'observation. Le tirage aléatoire est réalisé de façon à respecter une loi de probabilité d'observation définissant des probabilités d'observation de l'ensemble de parties observables du domaine d'observation, par le récepteur, sur la période d'observation T.

Par exemple, le procédé peut être appliqué pour un dispositif de vidéo-surveillance constitué de plusieurs caméras dont les images (séquences d'images de durée correspondant à la durée d'observation élémentaire) doivent être envoyées alternativement sur un même écran de visualisation (récepteur) pour un opérateur. Si chaque caméra surveille une zone j (partie j de l'espace prise parmi un ensemble de J' zones surveillées par des caméras respectives) et si la surveillance concerne des phénomènes périodiques, pseudo-périodiques ou permanents, avec éventuellement des priorités, il est possible d'optimiser l'ordre de présentation des images sur le poste de visualisation de l'opérateur par le procédé selon l'invention.

Les exemples suivants montrent que les modélisations probabilistes utilisées dans le procédé sont pertinentes. Par exemple la périodicité de prise d'article par un client dans un rayon de magasin peut se modéliser par une loi de Poisson de paramètre $1/\tau$ où $\tau$ est l'intervalle de temps moyen entre deux prises d'articles (paramètre de périodicité). Par exemple, la surveillance d'un objet dans une vitrine peut se modéliser par un modèle de permanence de présence de l'objet. Sur un tapis roulant de chaine de production, le passage d'objets devant une caméra peut être modélisé par une périodicité fixe, et sur un double tapis roulant pour un aller et un retour, le passage d'objets peut être modélisé par une périodicité analogue à un balayage sectoriel.

Les valeurs du paramètre de périodicité $\tau$ sont différentes pour les objets à surveiller dans les J'zones couvertes par les caméras. De même les priorités peuvent être différentes. Le procédé permet la modélisation probabiliste de la surveillance à effectuer, l'optimisation de la loi de séquencement (calcul des probabilités $x_j$ pour chacune des caméras) et le tirage aléatoire sans mémoire pour le choix des images (ou séquences d'images) à montrer sur l'écran de visualisation de l'opérateur.

Le procédé peut être appliqué à un dispositif de surveillance d'un champ d'éoliennes dont le récepteur est une caméra, par exemple, haute résolution pouvant être pointée dans des directions pré-définies (qui sont les différentes parties observables de l'espace) pour surveiller différents endroits de l'installation avec des priorités différentes et avec des modélisations de périodicités différentes. La surveillance de la rotation des pales d'éoliennes s'effectue avec une modélisation de phénomène permanent à surveiller (dès qu'on observe, la rotation ou non est observée), la surveillance des phénomènes possibles sur les équipements aux pieds des éoliennes s'effectue selon une modélisation de processus de Poisson de paramètre $1/\tau$ où $\tau$ est l'intervalle de temps moyen entre deux occurrences de phénomène aléatoire à surveiller. Une priorité différente peut être utilisée selon les équipements.

La loi de probabilité d'observation $x_j$ minimise une grandeur prédéterminée représentative de la proportion de phénomènes non observés par le récepteurs (ou non-interceptés par le récepteurs, proportion de signaux non interceptés dans le cas précédemment décrit) pendant la période d'observation T, parmi un ensemble de phénomènes supposés devoir être observés (ou interceptés) par le récepteur. Les phénomènes supposés devoir être observés par le récepteur sont supposés avoir lieu avec des périodicités telles qu'elles peuvent être modélisées par les périodicités d'éclairement d'un récepteur par des signaux issus d'un ensemble de sources fonctionnant selon un ensemble de types de balayages pris parmi un balayage circulaire, un balayage sectoriel, un balayage électronique et une émission permanente (pouvant être observée en permanence pendant le récepteur), et sont supposés être observables sur un ensemble J' de parties observables j du domaine d'observation mentionné précédemment. La valeur de la grandeur prédéterminée mentionnée ci-dessus est déterminée à partir d'une modélisation de l'ensemble de phénomènes supposés devoir être observés :

- par une famille de densités de probabilité $p_{j,\,b}(\tau)$ exprimées en fonction d'un paramètre de périodicité $\tau$, pour une partie j et un type de balayage donné b et/ou
- à partir d'une famille de probabilités de présence $\pi_{j,b}$, dans l'ensemble de phénomènes considéré, de phénomènes observables dans une partie j du domaine d'observation et issus d'un type de balayage prédéterminé b,

ladite au moins une famille étant définie pour l'ensemble J de de parties observables j et pour l'ensemble B de types de balayage, ledit paramètre de périodicité $\tau$ étant représentatif de la durée moyenne, sur la période d'observation T, entre deux occurrences successives d'un phénomène dans le cas où sa périodicité est modélisée par la périodicité de l'éclairement d'un récepteur par un signal issu d'une source émettant selon un balayage électronique, sectoriel ou circulaire. Le paramètre de périodicité $\tau$ est la durée élémentaire d'observation $\varepsilon_j$ dans le cas où le phénomène est permanent.

La grandeur représentative de la proportion de phénomènes non observés peut être la probabilité moyenne de non-interception (ou non observation), d'un phénomène sur la durée D ou bien la durée moyenne entre deux interceptions consécutives du phénomène. Les moyennes sont réalisées comme décrit pour l'exemple précis de l'interception de signaux électromagnétiques dans lequel ces grandeurs sont la probabilité moyenne de non interception d'un signal issu d'une même source sur la durée D et la durée moyenne entre deux interceptions consécutives d'un signal issu d'une même source.

Dans le cas général, $p_j(\tau)$ est une densité de probabilité de présence de phénomènes intervenant dans une partie j du domaine observable.

L'étape de détermination de la loi de probabilité peut être réalisée de la même manière que comme décrit en référence à l'exemple particulier d'interception de signaux électromagnétiques. Les formules des probabilités moyennes de non-interception et de la durée moyenne entre deux interceptions obtenues et les lois de probabilité obtenues sont en particulier les mêmes que dans l'exemple décrit puisque les modélisations des phénomènes sont les mêmes.

Ce procédé général présente les mêmes avantages que ceux qui ont été décrits en référence à l'exemple sur les signaux électromagnétiques. En particulier il présente les mêmes avantages vis-à-vis des phénomènes dont les périodicités sont modélisables par la périodicité d'éclairement d'un récepteur par des signaux issus d'un ensemble de sources fonctionnant selon un ensemble de types de balayages pris parmi un balayage circulaire, un balayage sectoriel, un balayage électronique et une émission permanente, et qui sont supposés être observables sur ledit ensemble J' de parties observables j.

L'invention a également pour objet un système de réception comprenant des moyens de séquencement aptes à mettre en oeuvre le procédé de séquencement.

[1] I.V.L CLARKSON et al. Sensor Scheduling in electronic support using Markov chains IEE Proc. Radar Sonar Navig. Vol 153 N°4 pp325-332 August 2006.

[2] Pierre Faurre "Analyse Numérique - Notes d'optimisation" - Ecole Polytechnique - Ellipses-1988

[3] Dimitri P. Bertsekas - "Constrained Optimization and Lagrange Multiplier Methods" - Athena Scientific -1996

**EP 2 662 701 B1**

[4] D.E.Knuth "The art of computer programming - Vol2 Seminumerical algorithms" - Addison-Wesley - 1981

**Revendications**

1. Procédé de séquencement d'un récepteur (1) apte à recevoir des signaux électromagnétiques émis dans une bande de fréquence de réception sur une période d'écoute de signaux T, comprenant une étape de génération (110) de consignes d'écoute successives devant être exécutées successivement par le récepteur (1), **caractérisé en ce que** lesdites consignes d'écoute étant obtenues par tirage aléatoire sans mémoire parmi un ensemble de consignes d"écoute définissant chacune une durée élémentaire d'écoute εj, et une bande de fréquence d'écoute j, prise parmi un ensemble J' de bandes fréquences d'écoute, sur laquelle le récepteur doit régler sa bande de fréquence de réception pendant la durée élémentaire d'écoute εj, le tirage aléatoire étant réalisé de façon à respecter une loi de probabilité d'écoute définissant des probabilités d'écoute des bandes de fréquence d'écoute respectives de l'ensemble des bandes de fréquence d'écoute.

2. Procédé selon la revendication 1, dans lequel la loi de probabilité d'écoute xj minimise une grandeur prédéterminée représentative de la proportion de signaux non-interceptés, pendant la période d'écoute (T) et par le récepteur (1), parmi un ensemble de signaux supposés devoir être interceptés par le récepteur (1) et être issus d'un ensemble de sources fonctionnant selon un ensemble de types de balayage B comprenant au moins un type de balayage b pris parmi un balayage circulaire, un balayage électronique, un balayage sectoriel et une émission permanente, et émettant des signaux présentant des fréquences comprises dans l'ensemble J de bandes de fréquence d'écoute j.

3. Procédé de séquencement selon la revendication 2, dans lequel ladite valeur de la dite grandeur est déterminée à partir d'une modélisation dudit ensemble de signaux par une famille de densités de probabilité $p_{j,\,b}(\tau)$ exprimées en fonction d'un paramètre de périodicité $\tau$, pour une bande de fréquence d'écoute j et un type de balayage donné b et à partir d'une famille de probabilités de présence $\pi_{j,\,b}$, dans l'ensemble de signaux considéré, de signaux émis avec une fréquence comprise dans une bande de fréquence d'écoute j et issus d'un type de balayage prédéterminé b, ladite au moins une famille étant définie pour l'ensemble J de bandes de fréquences d'écoute j et pour l'ensemble B de types de balayage, ledit paramètre de périodicité $\tau$ étant représentatif de la durée moyenne, sur la période d'écoute T, entre deux éclairements successifs du récepteur par un signal issu d'une même source dans le cas des balayages électronique, sectoriel et circulaire et étant la durée élémentaire d'écoute $\varepsilon_j$ dans le cas des émissions permanentes.

4. Procédé de séquencement selon l'une quelconque des revendications 2 à 3, dans lequel l'ensemble de types de balayage comprend plusieurs types de balayages.

5. Procédé de séquencement selon l'une quelconque des revendications 2 à 4, dans lequel la grandeur est la probabilité moyenne de non-interception d'un signal sur une durée D($\tau$), ladite moyenne étant réalisée sur ledit ensemble J' de bandes de fréquence j, sur ledit ensemble B de type de balayage b, et sur un domaine de paramètre de périodicité $\tau$, l'étape de détermination (100) de la loi de probabilité comprenant une étape d'optimisation consistant à minimiser ladite probabilité moyenne de non-interception.

6. Procédé de séquencement selon la revendication précédente, dans lequel on considère que la durée D($\tau$) est proportionnelle au paramètre de périodicité $\tau$.

7. Procédé selon l'une quelconque des revendications 5 à 6, dans lequel l'étape d'optimisation est réalisée avec les contraintes suivantes :

$$\alpha > \frac{1}{J'-1}\left( J'\,Max_{j}\left(\ln \pi_j\right) - \sum_{k=1}^{J'} \ln \pi_k \right) \text{ et } \alpha > \sum_{k=1}^{J'} \ln \pi_k - J'\,Max_{j}\left(\ln \pi_j\right)$$

où $\pi_j$ et $\pi_k$ appartiennent à l'intervalle ]0 ; 1], où $\sum_{j=1}^{J'} \pi_j = 1$ et $\sum_{k=1}^{J'} \pi_k = 1$ et où $\alpha$ est le rapport entre la durée

D($\tau$) et le paramètre de périodicité.

**8.** Procédé de séquencement selon l'une quelconque des revendications 5 à 7, dans lequel la probabilité moyenne de non-interception est : $\sum_{j=1}^{J'} \pi_j \, G_j(x_j)$ où $G_j(x_j) = \int_0^\infty e^{-x_j D(\tau)/\tau} p_j(\tau) d\tau$ et où $p_j(\tau)$ est une densité de probabilité de présence, où $\pi_j$ appartient à l'intervalle ]0 ; 1] et où $\sum_{j=1}^{J'} \pi_j = 1$.

**9.** Procédé de séquencement selon l'une quelconque des revendications 5 à 6, dans lequel la probabilité moyenne de non-interception est : $\sum_{j=1}^{J'} \pi_j \, G_j(x_j)$ où

$$G_j(x_j) = \int_0^\infty (1 - x_j) 2[D(\tau)/2\tau] \left(1 - \frac{D(\tau)}{2\tau} x_j + \left[\frac{D(\tau)}{2\tau}\right] x_j\right) p_j(\tau) d\tau ,$$ où $p_j(\tau)$ est une densité de probabilité de présence, où $\pi_j$ appartient à l'intervalle ]0 ; 1] et où $\sum_{j=1}^{J'} \pi_j = 1$.

**10.** Procédé de séquencement selon l'une quelconque des revendications 5 à 7, dans lequel la probabilité moyenne de non- interception est : $\sum_{j=1}^{J'} \pi_j \, G_j(x_j)$ où $G_j(x_j) = \int_0^\infty (1 - x_j)^{[D(\tau)/\tau]} p_j(\tau) d\tau$ , où $p_j(\tau)$ est une densité de probabilité, où $\pi_j$ appartient à l'intervalle ]0 ; 1] et où $\sum_{j=1}^{J'} \pi_j = 1$.

**11.** Procédé de séquencement selon l'une quelconque des revendications 5 à 7, dans lequel la probabilité moyenne de non- interception est : $\sum_{j=1}^{J'} \pi_j \, (1 - x_j)^{[D(\tau)/\tau]}$ où $\pi_j$ appartient à l'intervalle ]0 ; 1] et où $\sum_{j=1}^{J'} \pi_j = 1$.

**12.** Procédé de séquencement selon l'une quelconque des revendications 5 à 7, dans lequel la probabilité moyenne de non-interception est :

$$H(x_j) = H1(x_j) + H2(x_j) \text{ ou } H1(x_j) \text{ ou } H2(x_j)$$

où $H1(x_j) = \sum_{b1} \sum_{j=1}^{J'} \left(\pi_{j,b1}(1 - x_j)^{\alpha_{b1}}\right)$ et où $H2(x_j) = \pi_{j,elec} e^{-\alpha_{elec} x_j}$, où $\pi_{j,b1}$ et $\pi_{j,elec}$ appartiennent à l'intervalle ]0 ; 1] et où $\sum_{j=1}^{J'} \pi_{j,elec} + \sum_{j=1}^{J'} \sum_{b1} \pi_{j,b1} = 1$.

**13.** Procédé de séquencement selon l'une quelconque des revendications 1 à 7, dans lequel la loi de probabilité est :

$$x_j = \frac{1}{J'} + \frac{1}{\alpha}\left( \ln \pi_j - \frac{1}{J'}\sum_{k=1}^{J'} \ln \pi_k \right)$$ pour j=1 à J', où $\alpha$ est positif, et où $\pi_j$ et $\pi_k$ appartiennent à l'intervalle ]0 ;

1] et où $\sum_{j=1}^{J'} \pi_j = 1$.

**14.** Procédé de séquencement selon l'une quelconque des revendications 1 à 7, dans lequel la loi de probabilité d'écoute est : $x_j = 1 - \left(\frac{1}{\pi_j}\right)^{\frac{1}{\alpha-1}} \dfrac{J'-1}{\displaystyle\sum_{k=1}^{J'}\left(\pi_k^{\frac{1}{1-\alpha}}\right)}$ pour j= 1 à J' où $\alpha$ est un entier supérieur à 2 et où $\pi_j$ et $\pi_k$ appartiennent

à l'intervalle ]0 ; 1] et où et

$$\sum_{j=1}^{J'} \pi_j = 1 \sum_{k=1}^{J'} \pi_k = 1.$$

**15.** Procédé de séquencement selon l'une quelconque des revendications 2 à 4, dans lequel la grandeur est la durée moyenne entre deux interceptions consécutives, par le récepteur, d'un signal, ladite moyenne étant réalisée sur ledit ensemble J' de fréquences j, sur ledit ensemble B de type de balayage b, et sur un domaine de paramètre de périodicité $\tau$.

**16.** Procédé de séquencement selon la revendication précédente, dans lequel la durée moyenne entre deux interceptions

est : $K = \displaystyle\sum_{j=1}^{J'} \frac{\tau_j}{x_j}$ où $\tau_j$ est la moyenne du paramètre de périodicité, réalisée sur l'ensemble de types de balayages.

**17.** Procédé de séquencement selon l'une quelconque des revendications 1 ou 15 à 16 dans lequel la loi de probabilité d'écoute est : $x_j = \dfrac{\sqrt{\tau_j}}{\displaystyle\sum_{k=1}^{J'}\sqrt{\tau_k}}$ ; j = 1,2,...,J' où $\tau_j$ et $\tau_k$ correspondent aux moyennes du paramètre de périodicité, réalisées sur l'ensemble de types de balayages pour la partie d'indice j et respectivement d'indice k.

**18.** Procédé de séquencement selon l'une quelconque des revendications 3 ou 4 à 17 en ce qu'elles dépendent de la revendication 3, comprenant une étape de prétraitement (90) comprenant une étape de détermination de densités de probabilité $p_{j,b}(\tau)$ et/ou de probabilités de présence $\pi_{j,b}$, à partir de domaines d'intérêt définis pour les types de balayages b de l'ensemble B et s'étendant, dans un domaine fréquence-paramètre de périodicité selon un axe de fréquences f et selon un axe de paramètre de périodicité $\tau$ pour les balayages circulaires, sectoriel et permanents, et pour les émissions permanentes, selon l'axe des fréquences, chaque domaine d'intérêt étant associé à un degré de priorité.

**19.** Procédé selon la revendication précédente, dans lequel l'étape de prétraitement comprend une étape consistant à découper l'axe des fréquences en un deuxième ensemble de bandes de fréquences d'indice m avec m = 1 à M où M est au moins égal à J' et, l'axe des paramètres de périodicité en bandes de paramètres de périodicité, de façon à délimiter des cases occupant chacune une deuxième bande de fréquence d'indice M une bande de paramètre de périodicité et,

- pour chaque type de balayage de l'ensemble B appartenant à l'ensemble formé par les balayages électronique, circulaire et sectoriel, une première étape de cumul dans laquelle on associe à chaque case du domaine fréquence-paramètre de périodicité associé audit type de balayage, un premier produit correspondant au produit de la proportion de la dite case qui est couverte par un domaine d'intérêt défini pour ledit type de balayage et du degré d'intérêt qui est associé audit domaine d'intérêt,

- lorsque l'ensemble B comprend des émissions permanentes, une deuxième étape de cumul dans laquelle on associe à chaque deuxième bande de fréquence, un deuxième produit correspondant au produit de la proportion de ladite deuxième bande de fréquence qui est couverte par un domaine d'intérêt défini pour les émissions permanentes et du degré d'intérêt qui est associé audit domaine,

- une étape de calcul d'une somme globale correspondant à la somme, de la somme des premiers produits réalisée sur tous les types de balayage de l'ensemble B appartenant à l'ensemble formé par les balayages circulaire, sectoriel et électronique, et des deuxièmes produits,

- une étape de normalisation consistant à calculer le rapport entre les premiers produits respectifs et la somme globale et entre les deuxièmes produits respectifs et la somme globale.

**20.** Procédé selon la revendication précédente comprenant pour au moins un type de balayage de l'ensemble B pris parmi les balayages circulaire, sectoriel et électronique, une étape de calcul, de probabilités de présence dans l'environnement du récepteur, de signaux émis avec une fréquence comprise dans chaque deuxième bande de fréquence et étant issus du balayage considéré en sommant les rapports, entre les premiers produits et la somme globale, obtenus pour ladite deuxième bande de fréquence et pour le balayage considéré.

**21.** Procédé selon l'une quelconque des revendications 19 à 20, dans lequel les positions et largeurs des deuxièmes bandes de fréquence respectives sont choisies, connaissant une valeur maximale de la largeur de la bande de fréquence de réception du récepteur, de manière à minimiser le nombre de deuxièmes bandes de fréquence présentant une largeur égale ou inférieure à la valeur maximale de la largeur de la bande de fréquence de réception et qui sont au moins partiellement couvertes par un domaine d'intérêt défini pour l'un quelconque des balayages de l'ensemble B.

**Patentansprüche**

**1.** Verfahren zum Sequenzieren eines Empfängers (1), der elektromagnetische Signale empfangen kann, die in einem Empfangsfrequenzband während einer Signalhorchperiode T übertragen wurden, das einen Schritt (110) des Erzeugens von sukzessiven Horchbefehlen beinhaltet, die sukzessiv von dem Empfänger (1) auszuführen sind, **dadurch gekennzeichnet, dass** die Horchbefehle durch zufälliges Wählen, ohne Speicher, aus einem Satz von Horchbefehlen erhalten werden, die jeweils eine elementare Horchdauer $\varepsilon j$ und ein Horchfrequenzband j definieren, das aus einem Satz J' von Horchfrequenzbändern genommen wird und auf das der Empfänger sein Empfangsfrequenzband während der elementaren Horchdauer $\varepsilon j$ justieren muss, wobei die zufällige Auswahl so erfolgt, dass sie einem Horchwahrscheinlichkeitsgesetz entspricht, das Horchwahrscheinlichkeiten der jeweiligen Horchfrequenzbänder des Satzes von Horchfrequenzbändern definiert.

**2.** Verfahren nach Anspruch 1, wobei das Horchwahrscheinlichkeitsgesetz xj eine vorbestimmte Größe minimiert, die den Anteil von Signalen, die während der Horchperiode (T) nicht vom Empfänger (1) erfasst werden, aus einem Satz von Signalen repräsentiert, von denen angenommen wird, dass sie vom Empfänger (1) erfasst werden müssen, und die von einem Satz von Quellen kommen, die gemäß einem Satz B von Scan-Typen arbeiten, der wenigstens einen Scan-Typ B aus kreisförmigem Scan, elektronischem Scan, sektoriellem Scan und Dauerübertragung umfasst, und die Signale mit Frequenzen innerhalb des Satzes J von Horchfrequenzbändern j übertragen.

**3.** Sequenzierungsverfahren nach Anspruch 2, wobei der Wert der Größe auf der Basis einer Modellierung des Satzes von Signalen an einer Klasse von Wahrscheinlichkeitsdichten $p_{j,\,b}(\tau)$ ermittelt wird, ausgedrückt in Abhängigkeit von einem Periodizitätsparameter $\tau$, für ein Horchfrequenzband j und einen gegebenen Scan-Typ b, und auf der Basis einer Klasse von Anwesenheitswahrscheinlichkeiten $\pi_{j,\,b}$ innerhalb des Satzes von betrachteten Signalen, von Signalen, die mit einer Frequenz übertragen werden, die innerhalb eines Horchfrequenzbandes j liegt, und die von einem vorbestimmten Scan-Typ b kommen, wobei die wenigstens eine Klasse für den Satz J von Horchfrequenzbändern j und für den Satz B von Scan-Typen definiert wird, wobei der Periodizitätsparameter $\tau$ die mittlere Dauer über die Horchperiode T zwischen zwei aufeinander folgenden Illuminationen des Empfängers mit einem Signal repräsentiert, das von derselben Quelle kommt, im Falle von elektronischen, sektoriellen und kreisförmigen Scans, und die elementare Horchdauer $\varepsilon_j$ im Falle von Dauerübertragungen ist.

**4.** Sequenzierungsverfahren nach einem der Ansprüche 2 bis 3, wobei der Satz von Scan-Typen mehrere Scan-Typen umfasst.

5. Sequenzierungsverfahren nach einem der Ansprüche 2 bis 4, wobei die Größe die mittlere Wahrscheinlichkeit einer Nichterfassung eines Signals über eine Dauer D($\tau$) ist, wobei das Mittel auf dem Satz J' von Frequenzbändern j, auf dem Satz B von Scan-Typen b und auf einer Periodizitätsparameterdomäne $\tau$ realisiert wird, wobei der Schritt (100) des Ermittelns des Wahrscheinlichkeitsgesetzes einen Optimierungsschritt bestehend aus dem Minimieren der mittleren Wahrscheinlichkeit einer Nichterfassung beinhaltet.

6. Sequenzierungsverfahren nach dem vorherigen Anspruch, wobei die Dauer D($\tau$) als proportional zum Periodizitätsparameter $\tau$ angesehen wird.

7. Verfahren nach einem der Ansprüche 5 bis 6, wobei der Optimierungsschritt mit den folgenden Einschränkungen durchgeführt wird:

$$\alpha > \frac{1}{J'-1}\left( J' \underset{j}{Max}(\ln \pi_j) - \sum_{k=1}^{J'} \ln \pi_k \right) \text{ und } \alpha > \sum_{k=1}^{J'} \ln \pi_k - J' \underset{j}{Max}(\ln \pi_j)$$

wobei $\pi_j$ und $\pi_k$ zum Intervall ]0; 1] gehören, wobei $\sum_{j=1}^{J'} \pi_j = 1$ und $\sum_{k=1}^{J'} \pi_k = 1$ ist und wobei $\alpha$ das Verhältnis zwischen der Dauer D($\tau$) und dem Periodizitätsparameter ist.

8. Sequenzierungsverfahren nach einem der Ansprüche 5 bis 7, wobei die mittlere Wahrscheinlichkeit einer Nichterfassung wie folgt ist: $\sum_{j=1}^{J'} \pi_j \; G_j(x_j)$, wobei $G_j(x_j) = \int_0^\infty e^{-x_j D(\tau)/\tau} p_j(\tau)d\tau$ ist und wobei $p_j(\tau)$ eine Anwesenheitswahrscheinlichkeitsdichte ist, wobei $\pi_j$ zum Intervall ]0; 1] gehört und wobei $\sum_{j=1}^{J'} \pi_j = 1$ ist.

9. Sequenzierungsverfahren nach einem der Ansprüche 5 bis 6, wobei die mittlere Wahrscheinlichkeit einer Nichterfassung wie folgt ist: $\sum_{j=1}^{J'} \pi_j \; G_j(x_j)$, wobei $G_j(x_j) = \int_0^\infty (1-x_j)^{2[D(\tau)/2\tau]} \left( 1 - \frac{D(\tau)}{2\tau} x_j + \left[ \frac{D(\tau)}{2\tau} \right] x_j \right) p_j(\tau)d\tau$ ist, wobei $p_j(\tau)$ eine Anwesenheitswahrscheinlichkeitsdichte ist, wobei $\pi_j$ zu dem Intervall ]0; 1] gehört und wobei $\sum_{j=1}^{J'} \pi_j = 1$ ist.

10. Sequenzierungsverfahren nach einem der Ansprüche 5 bis 7, wobei die mittlere Wahrscheinlichkeit einer Nichterfassung wie folgt ist: $\sum_{j=1}^{J'} \pi_j \; G_j(x_j)$, wobei $G_j(x_j) = \int_0^\infty (1-x_j)^{[D(\tau)/\tau]} p_j(\tau)d\tau$ ist, wobei $p_j(\tau)$ eine Anwesenheitswahrscheinlichkeitsdichte ist, wobei $\pi_j$ zu dem Intervall [0; 1] gehört und wobei $\sum_{j=1}^{J'} \pi_j = 1$ ist.

11. Sequenzierungsverfahren nach einem der Ansprüche 5 bis 7, wobei die mittlere Wahrscheinlichkeit einer Nichterfassung wie folgt ist: $\sum_{j=1}^{J'} \pi_j \left(1-x_j\right)^{[D(\tau)/\tau]}$ , wobei $\pi_j$ zu dem Intervall ]0; 1] gehört und wobei $\sum_{j=1}^{J'} \pi_j = 1$ ist.

**12.** Sequenzierungsverfahren nach einem der Ansprüche 5 bis 7, wobei die mittlere Wahrscheinlichkeit einer Nichterfassung wie folgt ist:

$$H(x_j) = H1(x_j) + H2(x_j) \text{ oder } H1(x_j) \text{ oder } H2(x_j)$$

wobei $H1(x_j) = \sum_{b1} \sum_{j=1}^{J'} \left(\pi_{j,b1}\left(1-x_j\right)^{\alpha_{b1}}\right)$ ist und wobei $H2(x_j) = \pi_{j,elec} e^{-\alpha_{elec} x_j}$ ist, wobei $\pi_{j,b1}$ und $\pi_{j,elec}$

zum Intervall ]0; 1] gehören und wobei $\sum_{j=1}^{J} \pi_{j,elec} + \sum_{j=1}^{J} \sum_{b1} \pi_{j,b1} = 1$ ist.

**13.** Sequenzierungsverfahren nach einem der Ansprüche 1 bis 7, wobei das Wahrscheinlichkeitsgesetz wie folgt lautet:

$x_j = \frac{1}{J'} + \frac{1}{\alpha}\left(\ln \pi_j - \frac{1}{J'}\sum_{k=1}^{J'} \ln \pi_k\right)$ für j = 1 bis J', wobei $\alpha$ positiv ist und wobei $\pi_j$ und $\pi_k$ zum Intervall ]0; 1] gehören und wobei $\sum_{j=1}^{J'} \pi_j = 1$ ist.

**14.** Sequenzierungsverfahren nach einem der Ansprüche 1 bis 7, wobei das Horchwahrscheinlichkeitsgesetz wie folgt lautet: $x_j = 1 - \left(\frac{1}{\pi_j}\right)^{\frac{1}{\alpha-1}} \frac{J'-1}{\sum_{k=1}^{J'}\left(\pi_k \frac{1}{1-\alpha}\right)}$ für j = 1 bis J', wobei $\alpha$ eine ganze Zahl größer als 2 ist und wobei $\pi_j$ und $\pi_k$

zum Intervall ]0; 1] gehören und wobei $\sum_{j=1}^{J'} \pi_j = 1$ $\sum_{k=1}^{J'} \pi_k = 1$ ist.

**15.** Sequenzierungsverfahren nach einem der Ansprüche 2 bis 4, wobei die Größe die mittlere Dauer zwischen zwei aufeinander folgenden Erfassungen eines Signals durch den Empfänger ist, wobei das Mittel an dem Satz J' von Frequenzen j, an dem Satz B von Scan-Typen b und auf einer Periodizitätsparameterdomäne $\tau$ realisiert wird.

**16.** Sequenzierungsverfahren nach dem vorherigen Anspruch, wobei die mittlere Dauer zwischen zwei Erfassungen wie folgt lautet: $K = \sum_{j=1}^{J'} \frac{\tau_j}{x_j}$ , wobei $\tau_j$ das an dem Satz von Scan-Typen realisierte Mittel des Periodizitätsparameters ist.

**17.** Sequenzierungsverfahren nach nach einem der Ansprüche 1 oder 15 bis 16, wobei das Horchwahrscheinlichkeitsgesetz wie folgt lautet: $x_j = \frac{\sqrt{\tau_j}}{\sum_{k=1}^{J'} \sqrt{\tau_k}}$ ; $j = 1,2,...,J$ , wobei $\tau_j$ und $\tau_k$ den Mitteln des Periodizitätsparameters entsprechen, realisiert an dem Satz von Scan-Typen für den Teil mit Index j bzw. mit Index k.

**18.** Sequenzierungsverfahren nach einem der Ansprüche 3 oder 4 bis 17 in Abhängigkeit von Anspruch 3, das einen Vorverarbeitungsschritt (90) beinhaltet, der einen Schritt des Ermittelns von Wahrscheinlichkeitsdichten $p_{j,b}(\tau)$ und/oder Anwesenheitswahrscheinlichkeiten $\pi_{j,b}$ auf der Basis von Domänen von Interesse beinhaltet, die für die Scan-Typen b des Satzes B definiert sind und, in einer Frequenzparameter-Periodizitätsdomäne, entlang einer Frequenzachse f und entlang einer Periodizitätsparameterachse τ für kreisförmige, sektorielle und permanente Scans und für Dauerübertragungen entlang der Achse der Frequenzen verlaufen, wobei jede Domäne von Interesse mit einer Prioritätsstufe assoziiert ist.

**19.** Verfahren nach dem vorherigen Anspruch, wobei der Vorverarbeitungsschritt einen Schritt bestehend aus dem Unterteilen der Achse der Frequenzen in einen zweiten Satz von Frequenzbändern mit einem Index m, wobei m = 1 bis M ist, wobei M wenigstens gleich J' ist, der Achse der Periodizitätsparameter in Bänder von Periodizitätsparametern beinhaltet, um Felder zu begrenzen, die jeweils ein zweites Frequenzband mit Index M belegen, und ein Periodizitätsparameterband, und Folgendes beinhaltet:

- einen ersten Kumulationsschritt, für jeden Scan-Typ des Satzes B, der zu dem Satz gehört, der von den elektronischen, kreisförmigen und sektoriellen Scans gebildet wird, in dem mit jedem Feld der mit dem Scan-Typ assoziierten Frequenzdomäne-Periodizitätsparameter ein erstes Produkt assoziiert wird, entsprechend dem Produkt aus dem Anteil des Feldes, das von einer für den Scan-Typ definierten Domäne von Interesse bedeckt wird, und dem mit der Domäne von Interesse assoziierten Grad von Interesse;
- einen zweiten Kumulationsschritt, wenn der Satz B Dauerübertragungen umfasst, in dem mit jedem zweiten Frequenzband ein zweites Produkt assoziiert wird, entsprechend dem Produkt aus dem Anteil des zweiten Frequenzbands, das von einer für die Dauerübertragungen definierten Domäne von Interesse bedeckt wird, und dem mit der Domäne assoziierten Grad von Interesse;
- einen Schritt des Berechnens einer der Summe entsprechenden globalen Summe von der Summe der ersten Produkte, die an allen Scan-Typen des Satzes B realisiert werden, die zu dem Satz gehören, der durch die kreisförmigen, sektoriellen und elektronischen Scans gebildet wird, und der zweiten Produkte;
- einen Normalisierungsschritt bestehend aus dem Berechnen des Verhältnisses zwischen den ersten jeweiligen Produkten und der globalen Summe und zwischen den zweiten jeweiligen Produkten und der globalen Summe.

**20.** Verfahren nach dem vorherigen Anspruch, das für wenigstens einen Scan-Typ des Satzes B aus den kreisförmigen, sektoriellen und elektronischen Scans einen Schritt des Berechnens von Anwesenheitswahrscheinlichkeiten, in der Umgebung des Empfängers, von Signalen beinhaltet, die auf einer Frequenz innerhalb jedes zweiten Frequenzbands übertragen werden und von dem betrachteten Scan kommen, durch Addieren der Verhältnisse zwischen den ersten Produkten und der globalen Summe, die für das zweite Frequenzband und für den betrachteten Scan erhalten wurden.

**21.** Verfahren nach einem der Ansprüche 19 bis 20, wobei die Positionen und Breiten der zweiten jeweiligen Frequenzbänder in Kenntnis eines Maximalwertes der Breite des Empfangsfrequenzbands des Empfängers ausgewählt werden, um die Zahl der zweiten Frequenzbänder mit einer Breite zu minimieren, die gleich oder kleiner als der Maximalwert der Breite des Empfangsfrequenzbands ist und wenigstens teilweise von einer für einen beliebigen der Scans aus Satz B definierten Domäne von Interesse abgedeckt wird.

**Claims**

**1.** A method for sequencing a receiver (1) capable of receiving electromagnetic signals transmitted in a reception frequency band during a signal listening period T, comprising a step (110) of generating successive listening instructions that must be successively executed by said receiver (1), **characterised in that** said listening instructions are obtained by randomly selecting, without memory, from among a set of listening instructions each defining an elementary listening duration $\varepsilon_j$ and a listening frequency band j, which is taken from among a set J' of listening frequency bands and on which said receiver has to adjust its reception frequency band during the elementary listening duration $\varepsilon_j$, said random selection being carried out so as to comply with a listening probability law defining listening probabilities of the respective listening frequency bands of the set of listening frequency bands.

**2.** The method according to claim 1, wherein the listening probability law $x_j$ minimises a predetermined magnitude representing the proportion of signals not intercepted by said receiver (1) during the listening period (T) from among a set of signals presumed to be able to be intercepted by said receiver (1) and to originate from a set of sources operating according to a set B of scan types comprising at least one scan type b taken from among a circular scan, an electronic scan, a sector scan and a permanent transmission, and transmitting signals having frequencies within the set J of listening frequency bands j.

3. The sequencing method according to claim 2, wherein said value of said magnitude is determined on the basis of modelling said set of signals on a group of probability densities $p_{j,\,b}(\tau)$, expressed as a function of a periodicity parameter $\tau$, for a listening frequency band j and a given scan type b and on the basis of a group of presence probabilities $\pi_{j,\,b}$, within the set of considered signals, of signals transmitted with a frequency that is within a listening frequency band j and that originate from a predetermined scan type b, said at least one group being defined for the set J of listening frequency bands j and for the set B of scan types, said periodicity parameter $\tau$ representing the mean duration, over the listening period T, between two successive illuminations of the receiver by a signal originating from the same source in the case of electronic, sector and circular scans and being the elementary listening duration $\varepsilon_j$ in the case of continuous transmissions.

4. The sequencing method according to any one of claims 2 to 3, wherein the set of scan types comprises a plurality of scan types.

5. The sequencing method according to any one of claims 2 to 4, wherein the magnitude is the mean probability of non-interception of a signal over a duration $D(\tau)$, said mean being realised on said set J' of frequency bands j, on said set B of scan types b and on a periodicity parameter domain $\tau$, said step (100) of determining the probability law comprising an optimisation step involving minimising said mean probability of non-interception.

6. The sequencing method according to the preceding claim, wherein the duration $D(\tau)$ is considered to be proportional to the periodicity parameter $\tau$.

7. The method according to any one of claims 5 to 6, wherein said optimisation step is carried out with the following limitations:

$$\alpha > \frac{1}{J'-1}\left( J'\,Max_{j}\big(\ln \pi_j\big) - \sum_{k=1}^{J'}\ln \pi_k \right) \quad\text{and}\quad \alpha > \sum_{k=1}^{J'}\ln \pi_k - J'\,Max_{j}\big(\ln \pi_j\big)$$

where $\pi_j$ and $\pi_k$ belong to the interval ]0; 1], where $\displaystyle\sum_{j=1}^{J'} \pi_j = 1$ and $\displaystyle\sum_{k=1}^{J'} \pi_k = 1$ and where $\alpha$ is the ratio between

the duration $D(\tau)$ and the periodicity parameter.

8. The sequencing method according to any one of claims 5 to 7, wherein the mean probability of non-interception is:

$$\sum_{j=1}^{J'}\pi_j\; G_j\big(x_j\big) \quad\text{where}\quad G_j\big(x_j\big) = \int_0^{\infty} e^{-x_j D(\tau)/\tau}\, p_j\,(\tau)d\tau \text{ and where } p_j(\tau) \text{ is a presence probability den-}$$

sity, where $\pi_j$ belongs to the interval ]0; 1] and where $\displaystyle\sum_{j=1}^{J'} \pi_j = 1$.

9. The sequencing method according to any one of claims 5 to 6, wherein the mean probability of non-interception is:

$$\sum_{j=1}^{J'}\pi_j\; G_j\big(x_j\big) \text{ where } G_j\big(x_j\big) = \int_0^{\infty}\big(1 - x_j\big)^{2[D(\tau)/2\tau]}\left(1 - \frac{D(\tau)}{2\tau}x_j + \left[\frac{D(\tau)}{2\tau}\right]x_j\right)p_j\,(\tau)d\tau \text{, where}$$

$p_j(\tau)$ is a presence probability density, where $\pi_j$ belongs to the interval ]0; 1] and where $\displaystyle\sum_{j=1}^{J'} \pi_j = 1$.

10. The sequencing method according to any one of claims 5 to 7, wherein the mean probability of non-interception is:

$$\sum_{j=1}^{J'}\pi_j\, G_j\big(x_j\big) \quad\text{where}\quad G_j\big(x_j\big) = \int_0^{\infty}\big(1 - x_j\big)^{[D(\tau)/\tau]}\, p_j\,(\tau)d\tau \quad \text{where } p_j(\tau) \text{ is a presence probability den-}$$

sity, where $\pi_j$ belongs to the interval ]0; 1] and where $\sum_{j=1}^{J'} \pi_j = 1$.

11. The sequencing method according to any one of claims 5 to 7, wherein the mean probability of non-interception is:

$$\sum_{j=1}^{J'} \pi_j \left(1 - x_j\right)^{[D(\tau)/\tau]}$$ where $\pi j$ belongs to the interval ]0; 1] and where

$$\sum_{j=1}^{J'} \pi_j = 1.$$

12. The sequencing method according to any one of claims 5 to 7, wherein the mean probability of non-interception is:

$$H(x_j) = H1(x_j) + H2(x_j) \text{ or } H1(x_j) \text{ or } H2(x_j)$$

or $H1(x_j) = \sum_{b1} \sum_{j=1}^{J'} \left(\pi_{j,b1}\left(1 - x_j\right)^{\alpha_{b1}}\right)$ and where $H2(x_j) = \pi_{j,elec} e^{-\alpha_{elec} x_j}$ or $\pi_{j,b1}$ and $\pi_{j,elec}$ belong to the interval ]0; 1] and where $\sum_{j=1}^{J'} \pi_{j,elec} + \sum_{j=1}^{J'} \sum_{b1} \pi_{j,b1} = 1.$

13. The sequencing method according to any one of claims 1 to 7, wherein the probability law is:

$$x_j = \frac{1}{J'} + \frac{1}{\alpha}\left(\ln \pi_j - \frac{1}{J'}\sum_{k=1}^{J'} \ln \pi_k\right)$$ for j=1 to J', where $\alpha$ is positive and where $\pi_j$ and $\pi_k$ belong to the

interval ]0; 1] and where $\sum_{j=1}^{J'} \pi_j = 1.$

14. The sequencing method according to any one of claims 1 to 7, wherein the listening probability law is:

$$x_j = 1 - \left(\frac{1}{\pi_j}\right)^{\frac{1}{\alpha-1}} \frac{J'-1}{\sum_{k=1}^{J'}\left(\pi_k^{\frac{1}{1-\alpha}}\right)}$$ for j=1 to J', where a is an integer greater than 2 and where $\pi_j$ and $\pi_k$ belong

to the interval ]0; 1] and where $\sum_{j=1}^{J'} \pi_j = 1 \sum_{k=1}^{J'} \pi_k = 1.$

15. The sequencing method according to any one of claims 2 to 4, wherein the magnitude is the mean duration between two consecutive interceptions of a signal by said receiver, said mean being realised on said set J' of frequencies j, on said set B of scan types b and from a periodicity parameter domain $\tau$.

16. The sequencing method according to the preceding claim, wherein the mean duration between two interceptions is: $K = \sum_{j=1}^{J'} \frac{\tau_j}{x_j}$ where $\tau_j$ is the mean of the periodicity parameter realised on the set of scan types.

**17.** The sequencing method according to claim 1 or to any one of claims 15 to 16, wherein the listening probability law

is: $x_j = \dfrac{\sqrt{\tau_j}}{\sum\limits_{k=1}^{J'} \sqrt{\tau_k}}$ ; $j = 1, 2, ..., J$ where $\tau_j$ and $\tau_k$ correspond to the means of the periodicity parameter realised on the set of scan types for the section having index j and having index k, respectively.

**18.** The sequencing method according to claim 3 or to any one of claims 4 to 17 as dependent on claim 3, comprising a pre-processing step (90) comprising a step of determining probability densities $p_{j,b}(\tau)$ and/or presence probabilities $\pi_{j,b}$ on the basis of domains of interest defined for the scan types b of the set B and extending, in a frequency-periodicity parameter domain, along a frequency axis f and along a periodicity parameter axis T for the circular, sector and permanent scans and along the axis of the frequencies for the continuous transmissions, with each domain of interest being associated with a priority level.

**19.** The method according to the preceding claim, wherein said pre-processing step comprises a step that involves splitting the axis of the frequencies into a second set of frequency bands having an index m, with m = 1 to M, where M is at least equal to J', and splitting the axis of the periodicity parameters into bands of periodicity parameters so as to delimit boxes that each occupy a second frequency band having the index M, a periodicity parameter band, and comprises,

- a first cumulation step, for each scan type of the set B belonging to the set formed by the electronic, circular and sector scans, in which step a first product is associated with each box of the frequency-periodicity parameter domain associated with said scan type, which product corresponds to the product of the proportion of said box that is covered by a domain of interest defined for said scan type and of the degree of interest that is associated with said domain of interest;
- a second cumulation step, when the set B comprises continuous transmissions, in which step a second product is associated with each second frequency band, which product corresponds to the product of the proportion of said second frequency band that is covered by a domain of interest defined for the continuous transmissions and of the degree of interest that is associated with said domain;
- a step of computing a global sum that corresponds to the sum, which global sum is computed from the sum of the first products realised on all of the scan types of the set B that belong to the set formed by the circular, sector and electronic scans and the second products;
- a normalisation step that involves computing the ratio between the first respective products and the global sum and between the second respective products and the global sum.

**20.** The method according to the preceding claim, comprising, for a least one scan type of the set B taken from among the circular, sector and electronic scans, a step of computing presence probabilities, in the environment of the receiver, of signals transmitted with a frequency within each second frequency band and originating from the considered scan by adding the ratios between the first products and the global sum obtained for said second frequency band and for the considered scan.

**21.** The method according to any one of claims 19 to 20, wherein the positions and widths of the second respective frequency bands are selected in the knowledge of a maximum value of the width of the reception frequency band of the receiver, so as to minimise the number of second frequency bands having a width that is equal to or is less than the maximum value of the width of the reception frequency band and that are at least partly covered by a defined domain of interest for any one of the scans of the set B.

1 Récepteur

3 Moyens de commande

2 Moyens de séquencement

Sa Emetteur 4a

Sb Emetteur 4b

Sc Emetteur 4c

FIG.1

$$T$$

| g | 1 | 2 | 3 | 4 | 5 | 7 | 7 | 8 | 9 |
| Cg | $(\varepsilon,1)$ | $(\varepsilon,5)$ | $(\varepsilon,7)$ | $(\varepsilon,2)$ | $(\varepsilon,5)$ | $(\varepsilon,3)$ | $(\varepsilon,4)$ | $(\varepsilon,7)$ | $(\varepsilon,1)$ |
| j | 1 | 5 | 7 | 2 | 7 | 3 | 4 | 7 | 1 |

$\varepsilon$

$t$

FIG.2

90 Prétraitement

100 Détermination d'une loi de probabilité

110 Génération d'une séquence de consignes d'écoute

10

120 Commande du récepteur au moyen de la séquence de consignes d'écoute

FIG.3

FIG.4a

FIG.4b

FIG.5a

FIG.5b

FIG.6

FIG.7

FIG.8

FIG.10

FIG.9a

FIG.9b

FIG.9c

FIG.9d

**EP 2 662 701 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2010027715 A
- US 2005052311 A
- US 6788243 B

### Littérature non-brevet citée dans la description

- **WINSOR et al.** Optimisation and evaluation of receiver search strategies for electronic support. *IET Radar sonar navigation, the institution of engineering and technology, UK,* 01 Avril 2012, vol. 6 (4), 233-240
- **I.V.L CLARKSON et al.** Sensor Scheduling in electronic support using Markov chains. *IEE Proc. Radar Sonar Navig.,* Août 2006, vol. 153 (4), 325-332
- **PIERRE FAURRE.** *Analyse Numérique - Notes d'optimisation,* 1988
- **DIMITRI P. BERTSEKAS.** Constrained Optimization and Lagrange Multiplier Methods. *Athena Scientific,* 1996
- **D.E.KNUTH.** The art of computer programming - Vol2 Seminumerical algorithms. Addison-Wesley, 1981, vol. 2